# FASCICULE DE BREVET EUROPEEN

(11) **EP 2 086 282 B1**
(45) Date de publication et mention de la délivrance du brevet: **25.11.2015**
(21) Numéro de dépôt: 09290045.5
(22) Date de dépôt: 23.01.2009
(51) Int. Cl.: H04W 88/04, H04M 1/725, H04W 8/22, H04L 29/08

(54) **Système de communication autoadaptatif**
Selbstadaptives Kommunikationssystem
Self-adaptive communication system

(30) Priorité: 31.01.2008 FR 0800529
(43) Date de publication de la demande: 05.08.2009
(73) Titulaire: Société Française du Radiotéléphone, 75008 Paris (FR)
(72) Inventeur: Bouvier, Christian, 78120 Rambouillet (FR); Teimoorzadeh, Kourosh, 28130 Bouglainval (FR)
(74) Mandataire: Debay, Yves

(56) Documents cités:
- WO-A-2006/070240
- VANEM E ET AL: "Virtual terminal as an XML web service" DATABASE AND EXPERT SYSTEMS APPLICATIONS, 2003. PROCEEDINGS. 14TH INTE RNATIONAL WORKSHOP ON 1-5 SEPT 2003, PISCATAWAY, NJ, USA,IEEE, 1 septembre 2003 (2003-09-01), pages 225-229, XP010658137 ISBN: 978-0-7695-1993-7
- BOHN J: "Instant Personalization and Temporary Ownership of Handheld Devices" MOBILE COMPUTING SYSTEMS AND APPLICATIONS, 2004. WMCSA 2004. SIXTH IEE E WORKSHOP ON WINDERMERE, CUMBRIA, UK 02-03 DEC. 2004, PISCATAWAY, NJ, USA,IEEE, 2 décembre 2004 (2004-12-02), pages 134-143, XP010757453 ISBN: 978-0-7695-2258-6

## Description

Le domaine de la présente invention est celui des télécommunications. Plus particulièrement, il s'agit d'un procédé exécuté par un terminal mobile de télécommunication interagissant avec des appareils interactifs de son environnement, par exemple pour commander ces appareils.

Les évolutions technologiques en particulier dans les domaines de l'électronique et des télécommunications, rendent les terminaux de communication, comme par exemple un assistant personnel ou un téléphone portable ou une station de travail, de plus en plus évolués. Un téléphone portable aura, par exemple, des fonctions de plus en plus nombreuses et évoluées. La complexité et les différentes particularités des terminaux de communication posent toutefois un problème d'adaptation à chaque type de terminal. Ainsi deux terminaux mobiles ayant des fonctions multimédias similaires et permettant un même usage, peuvent nécessiter chacun un apprentissage distinct de la part de l'utilisateur. Un professionnel devant se déplacer prend soin, par exemple, d'emporter son matériel pour pouvoir travailler plus efficacement. Les utilisations de terminaux ayant des fonctions similaires, peuvent ainsi être très éloignées l'une de l'autre.

Un terminal de communication en liaison avec le réseau de communication par ondes radiofréquences peut aussi recevoir des informations ou produire des requêtes ou des commandes, en interaction avec des agents de son environnement. L'interaction est cependant généralement limitée à un transfert de sonneries ou de photos, qui peut être réalisé selon un standard sur lequel les constructeurs des terminaux s'accordent. De plus certaines fonctions du terminal sont, par exemple, basées sur des organes distants tels qu'un serveur ou une station de couverture du réseau ou une passerelle de liaison avec des appareils d'un réseau local ou un point d'accès au réseau Internet. La mobilité du terminal pose ainsi un problème d'adaptation et de dépendance du terminal par rapport à son environnement.

L'augmentation du nombre d'appareils disponibles pose un problème d'organisation pour un utilisateur. Chaque appareil a, par exemple, sa propre télécommande qui est utilisée de façon particulière, obligeant l'utilisateur à se familiariser avec les particularités de chaque appareil. Ainsi malgré le degré actuel de sophistication des appareils commandés électroniquement, un utilisateur n'utilise généralement que des fonctions rudimentaires pour la plupart des appareils du fait que les commandes sont trop divergentes. La connexion des appareils à un terminal mobile pour être commandés par l'utilisateur, permettrait avantageusement de faciliter et de personnaliser les procédures de commande des appareils.

Le document de Vanern E. et al., intitulé « Virtual terminal as an XML web service », divulgue un terminal virtuel prenant la forme d'un service Web XML qui désire fournir de nombreux avantages par rapport au terminal virtuel connu. Premièrement, le terminal virtuel selon D1 accroit l'accessibilité au service, autorisant à de tierces parties de l'introduire dans de nouveaux segments de marché de façon directe. De plus, la personnalisation du service est rendue possible permettant l'introduction d'une diversification des terminaux virtuels. Enfin, les fonctionnalités du terminal virtuel sont rendues disponibles pour d'autres applications et plus seulement à des utilisateurs finaux humains. De cette façon, les fonctionnalités du terminal virtuel peuvent être invoquées par des applications et utilisées comme composantes afin de construire une large diversité d'autres services complexes. Notamment, ce terminal virtuel ne permet pas de proposer l'usage unique d'un seul terminal pour interagir avec des appareils interactifs de son environnement.

La présente invention a pour objet de remédier à un ou plusieurs des inconvénients de l'art antérieur en proposant un procédé de communication exécuté par un terminal mobile interactif dans son environnement, permettant une gestion de services par une interface autoadaptative en fonction de l'environnement du terminal mobile.

Cet objectif est atteint grâce à un procédé de communication exécuté par un terminal mobile dans son environnement comprenant au moins un appareil distant, le terminal mobile comprenant un composant de traitement communiquant avec un composant de mémorisation et au moins un composant de communication, caractérisé en qu'il comprend :
- une étape de détection, par le terminal mobile, d'un signal d'excitation provenant d'au moins un appareil distant communiquant avec le terminal par le composant de communication, comprenant la mémorisation d'un identifiant de cet appareil distant,
- une étape de consultation d'une bibliothèque d'interfaces logicielles du terminal mobile, d'activation d'au moins une des interfaces logicielles correspondant à une référence associée à l'appareil distant et d'association de cette interface logicielle à l'identifiant de l'appareil distant et
- une étape d'affichage, en fonction d'au moins l'interface activée, d'un menu de commande et d'information, activable par l'utilisateur du terminal mobile.

Selon une autre particularité, l'étape de consultation de la bibliothèque d'interfaces logicielles du terminal mobile est précédée de :
- une étape d'envoi, par le terminal mobile, à l'appareil identifié d'une requête de demande de commandes disponibles,
- une étape d'envoi, par l'appareil identifié, d'une réponse comprenant au moins la référence associée à l'appareil distant, fournie par l'appareil distant et correspondant à un type de commandes disponibles et
- une étape de sauvegarde de la réponse, par le terminal mobile.

Un autre objectif de la présente invention est proposer un procédé permettant une gestion de services par l'interface autoadaptative selon l'évolution des besoins de l'utilisateur.

Selon cet objectif, l'étape de consultation de la bibliothèque comprend au moins :
- une étape de comparaison d'au moins la référence fournie, relative aux commandes disponibles, avec des références d'un fichier d'archivage de la bibliothèque, et
- la lecture de l'interface logicielle associée à ladite référence fournie dans la bibliothèque, activée et utilisée pour le menu de commande et d'information, si le fichier d'archivage comprend une référence correspondant à la référence fournie, ou
- si le fichier d'archivage ne comprend pas de référence correspondant à ladite référence fournie, une étape d'extraction dans la réponse, d'une adresse d'un serveur d'interfaces logicielles, suivie d'une étape d'envoi, par le terminal mobile, au serveur d'interfaces logicielles, d'une requête d'interface logicielle associée à la référence fournie, et suivie d'une étape de sauvegarde dans la bibliothèque et d'activation d'une interface logicielle fournie par le serveur d'interfaces logicielles, associée à la référence fournie par l'appareil distant et mémorisée dans le fichier d'archivage.

Selon une autre particularité, le procédé est suivi d'une étape d'envoi d'une requête comprenant une des commandes de l'appareil détecté, ou une des commandes d'un serveur en communication avec l'appareil détecté, par l'utilisation du menu de commande et d'information, la requête comprenant la commande étant envoyée à l'appareil détecté par son identifiant.

Selon une autre particularité, l'étape de détection du signal d'excitation est précédée d'une étape d'activation d'un module de détection et de gestion des stimuli, l'activation du module de détection et de gestion des stimuli, étant réalisée par un dispositif extérieur de détection du terminal mobile dans un périmètre déterminé, ce dispositif extérieur transmettant au moins un signal d'activation du module de détection et de gestion des stimuli.

Selon une autre particularité, le dispositif extérieur de détection autorise l'activation du module de détection et de gestion des stimuli, après des étapes d'authentification mutuelle entre le terminal mobile et le dispositif extérieur de détection du terminal dans le périmètre déterminé.

Un autre objectif est de proposer un procédé permettant la personnalisation de l'interface autoadaptative, selon les besoins de l'utilisateur.

Selon cet objectif, le procédé comprend une personnalisation par l'utilisateur du menu de commande par :
- une étape de sélection d'un ou plusieurs stimuli chacun représentatif d'un signal déterminé produit par un appareil distant dont un identifiant est mémorisé dans le terminal mobile,
- une étape de sélection d'une ou plusieurs applications dont les références sont mémorisées dans le terminal mobile, pour être associées à la détection du ou des stimuli sélectionnés,
- une étape de sélection d'au moins une des interfaces logicielles qui comprend un ensemble interactif d'activation de fonctions de la ou des applications sélectionnées,
- une étape de mémorisation et d'association des sélections de stimuli, d'applications et de fonctions dans l'interface logicielle, pour définir un mode d'adaptation du menu de commande et d'information, l'interface logicielle sélectionnée étant intégrée au menu de commande et d'information à la détection du ou des stimuli sélectionnés, pour accéder aux applications sélectionnées.

Selon une autre particularité, le procédé est suivi d'une étape de transfert de données représentatives du menu de commande et d'information et de ses modes d'adaptation, vers un serveur distant d'archivage en communication avec le terminal mobile, l'archivage dans le serveur d'archivage étant réalisé en fonction des stimuli, des applications, des interfaces et de leurs fonctions, associés à un type de terminal mobile et à un identifiant personnel de l'utilisateur ou un identifiant d'une profession de l'utilisateur.

Selon une autre particularité, le procédé est précédé de :
- une étape d'envoi d'une requête de mise à jour de la bibliothèque d'interfaces, ou respectivement de mise à jour du menu de commande et d'information, cette requête comprenant l'identifiant personnel de l'utilisateur ou l'identifiant de la profession de l'utilisateur,
- une étape de téléchargement depuis le serveur distant en communication avec le terminal, en fonction de l'identifiant personnel de l'utilisateur ou de l'identifiant de la profession de l'utilisateur, de la bibliothèque d'interfaces logicielles mémorisée dans le terminal, ou respectivement de données de mise à jour du menu de commande et d'information.

Selon une autre particularité, l'affichage du menu de commande et d'information est réalisé en parallèle d'une détection des appareils environnants actifs comprenant :
- une étape d'envoi de requêtes de demande d'identifiants des appareils environnants,
- une étape de comparaison des identifiants reçus avec les identifiants précédemment mémorisés,
- une étape d'interruption d'affichage du menu de commande et de mise à jour du menu de commande et d'information si un identifiant précédemment mémorisé est manquant ou si un identifiant supplémentaire est détecté par rapport aux identifiants précédemment mémorisés, et
- une étape d'activation de l'affichage du menu de commande et d'information mis à jour.

Selon une autre particularité, le procédé comprend la gestion d'une pluralité de composants de communication et la gestion d'une pluralité d'appareils communiquant avec le terminal mobile chacun par un des composants de communication.

Un autre objet de la présente invention est de proposer un terminal interactif dans son environnement, permettant une gestion de services par une interface autoadaptative en fonction de l'environnement du terminal mobile.

Cet objectif est atteint grâce à un terminal mobile comprenant au moins un composant de traitement communiquant avec une mémoire et un composant de communication, caractérisé en ce qu'il comprend :
- une bibliothèque d'interfaces logicielles associées chacune à une référence d'interface et à un attribut représentatif d'un état actif ou passif de l'interface logicielle,
- un module d'exploration et de détermination d'identifiants d'appareils distants, réalisant une acquisition d'au moins un identifiant d'un appareil distant, après une détection, via le composant de communication, d'un signal d'excitation émis par cet appareil distant,
- un module de consultation de la bibliothèque d'interfaces logicielles, rendant actif l'attribut représentatif de l'état de l'interface logicielle correspondant à une référence associée à l'appareil distant et d'association de cet interface logicielle activée à l'identifiant de l'appareil distant,
- un module de chargement d'une ou plusieurs des interfaces logicielles activées, pour réaliser un menu interactif de commande et d'information activable par un utilisateur du terminal mobile.

Selon une autre particularité, le module d'exploration et de détermination d'identifiants d'appareils distants réalise une acquisition de la référence associée à l'appareil distant, fournie par l'appareil distant et correspondant à au moins un type de commandes disponibles pour l'appareil distant détecté.

Un autre objectif de la présente invention est proposer un terminal permettant une gestion de services par l'interface autoadaptative selon l'évolution des besoins de l'utilisateur.

Selon cet objectif, le terminal mobile comprend un module de chargement de la bibliothèque d'interfaces, en communication avec un serveur d'interfaces logicielles fournissant des données d'interfaces logicielles en fonction d'un identifiant personnel de l'utilisateur ou d'un identifiant professionnel de l'utilisateur ou d'un identifiant du type de terminal.

Un autre objectif est de proposer un terminal permettant la personnalisation de l'interface autoadaptative, selon les besoins de l'utilisateur.

Selon cet objectif, le terminal mobile comprend :
- des données mémorisées représentatives de stimuli,
- des données mémorisées représentatives d'applications fournissant des services,
- un module de personnalisation proposant successivement par le menu de commande et d'information, des éléments représentatifs de stimuli sélectionnables, puis des éléments représentatifs d'applications sélectionnables pour être associées à la détection du ou des stimuli sélectionnés, puis des éléments représentatifs d'interfaces sélectionnables comprenant chacune des fonctions d'activations de l'application sélectionnée, le module de personnalisation réalisant ensuite une mémorisation du ou des stimuli sélectionnés associés à l'application sélectionnée et à l'interface sélectionnée.

Selon une autre particularité, un stimulus sélectionné correspond à des données représentatives d'un signal d'excitation, transmis par le composant de communication, représentatif de :
- une valeur appartenant à une plage d'alerte déterminée, ou
- une valeur dépassant un seuil d'alerte déterminé, ou
- un identifiant de l'appareil distant ou du type de l'appareil distant duquel provient le signal.

Selon une autre particularité, le terminal mobile comprend un module de sélection d'un mode d'utilisation parmi une pluralité de modes d'utilisation, chaque mode d'utilisation étant associé à une ou plusieurs interfaces logicielles activées, réalisant le menu interactif de commande et d'information, un mode d'utilisation étant personnalisé ou associé à un usage déterminé de l'utilisateur, chaque mode d'utilisation pouvant être activé par l'utilisateur, les modes d'utilisation étant mémorisés sous la forme de données représentatives pour être téléchargées ou archivées ou modifiées et sauvegardées, l'activation d'un mode de sélection pouvant être associée à une détection d'un signal de déclenchement.

Selon une autre particularité, le terminal mobile comprend une pluralité de composants de communication dont au moins :
- un composant de communication avec un réseau cellulaire de communication par ondes radiofréquences, et
- un composant de communication sans contact, à courte distance avec des appareils de son environnement proche.

Un autre objet de la présente invention est de proposer un système de communication avec au moins un terminal mobile interactif dans son environnement, permettant une gestion de services par une interface autoadaptative du terminal en fonction de l'environnement du terminal mobile.

Cet objectif est atteint grâce à un système de communication comprenant un terminal mobile selon l'invention, caractérisé en ce qu'il comprend au moins un serveur d'interfaces logicielles de commande comprenant une base de données d'interfaces logicielles, les champs de la base de données comprenant pour chaque interface logicielle :
- une ou plusieurs références d'applications compatibles ou,
- une ou plusieurs références de types de terminaux mobiles compatibles ou,
- un ou plusieurs identifiants professionnels de l'utilisateur ou,
- un ou plusieurs identifiants personnels de l'utilisateur.

Selon une autre particularité, le système de communication comprend un dispositif de détection du terminal dans une zone déterminée, autorisant la ou les communications à courte distance du terminal mobile, après une authentification mutuelle avec le terminal mobile.

Selon une autre particularité, le système de communication comprend un dispositif central de gestion de ressources disponibles, en communication avec le terminal mobile, transmettant au terminal mobile un signal d'excitation comprenant des données représentatives des ressources et des commandes disponibles.

L'invention, ses caractéristiques et ses avantages apparaîtront plus clairement à la lecture de la description faite en référence aux figures ci-dessous référencées et données à titre d'exemples non limitatifs :

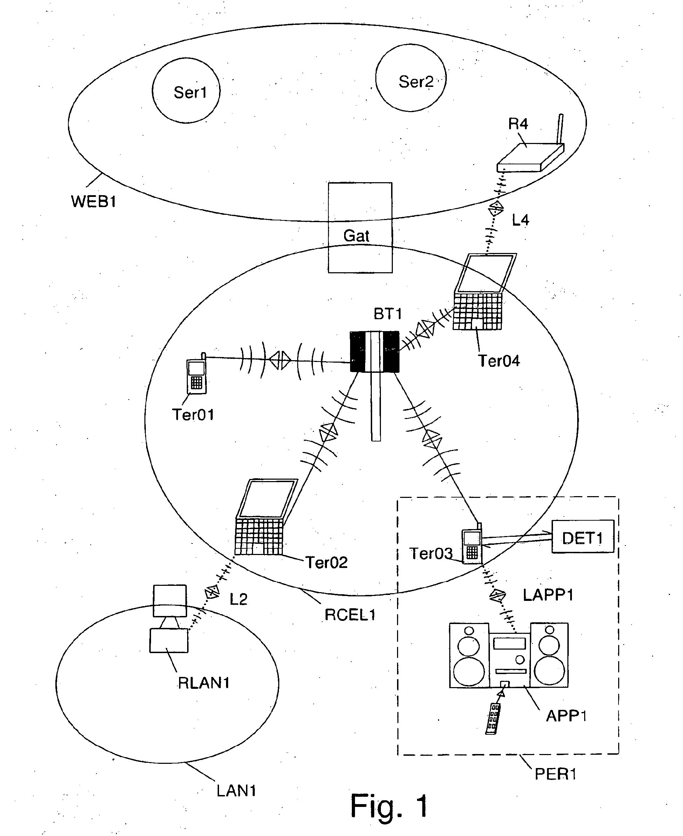

- la figure 1 représente un exemple de configuration d'une structure de communication pour des terminaux mobiles, selon l'invention ;
- la figure 2 représente un exemple de terminal mobile selon l'invention ;

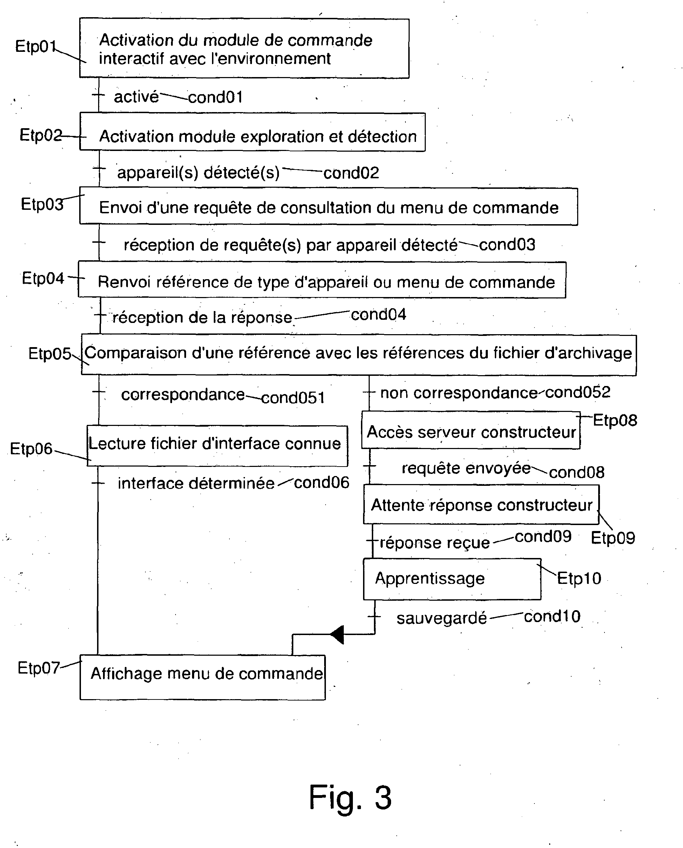

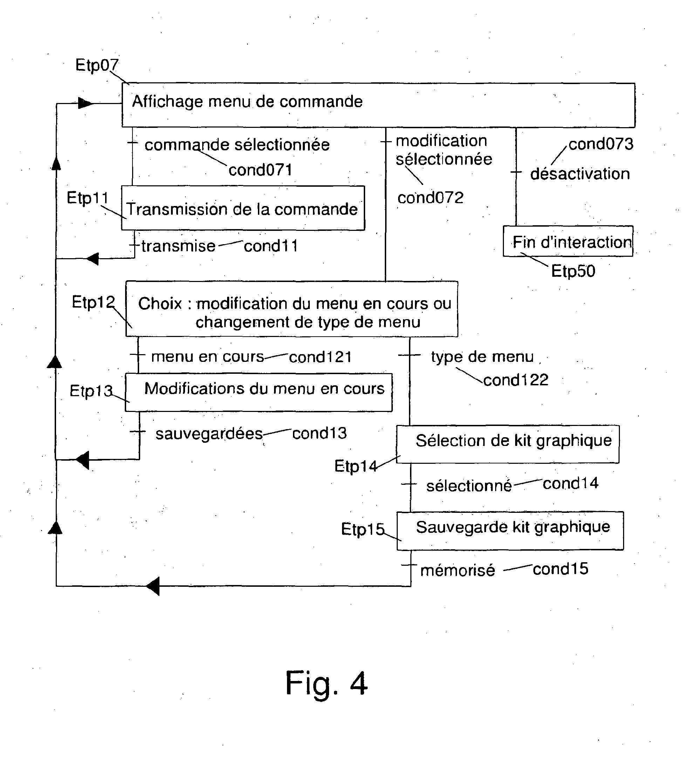

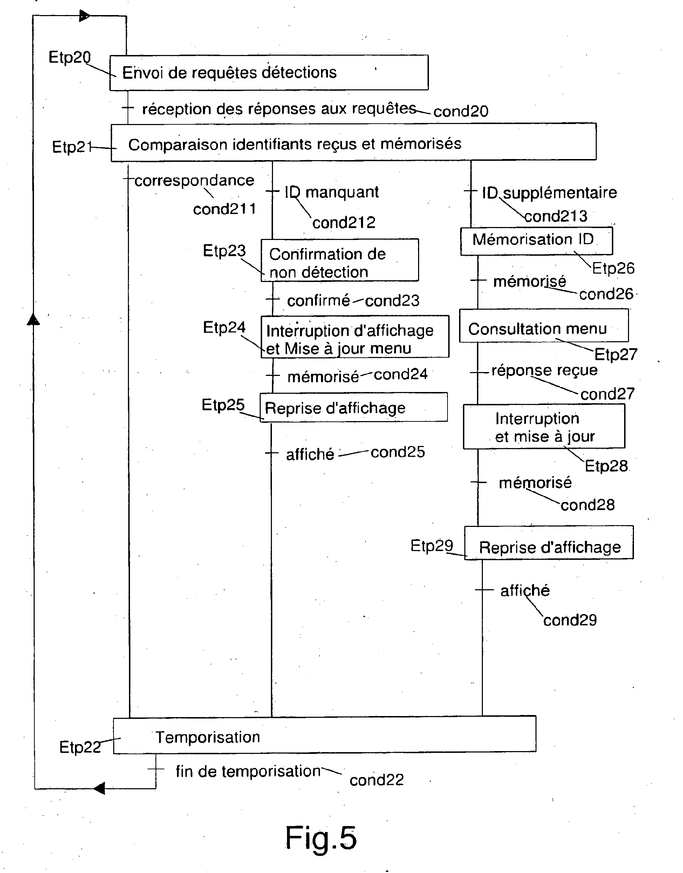

- les figures 3, 4, 5 et 6 représentent chacune un exemple de procédé de configuration ou de communication du terminal mobile en interaction avec l'environnement selon l'invention.

L'invention va à présent être décrite en référence aux figures précédemment citées. Un terminal mobile (Ter01, Ter02, Ter03, Ter04) tel qu'un téléphone cellulaire, communique d'une part au moyen d'un réseau (RCEL1) cellulaire de télécommunication par ondes radiofréquences et d'autre part avec d'autres appareils (APP1) ou d'autres réseaux de communication, tels que le réseau Internet (WEB1) ou un réseau local (LAN1) d'une entreprise ou d'une université, etc. Un terminal mobile sera de préférence portable à la main et pourra avantageusement être transporté dans une poche, tel que par exemple un téléphone cellulaire ou un assistant personnel de type PDA ou d'autre type d'appareil électronique de poche. Un terminal mobile pourra aussi être, bien entendu, un ordinateur ou une station de travail, porté par l'utilisateur ou installé dans un véhicule et équipé d'une carte de connexion à un réseau (RCEL1) cellulaire de télécommunication.

Un terminal mobile comprend, par exemple, un module de communication avec le réseau cellulaire de télécommunication par ondes radiofréquences. Ce module est, par exemple équipé d'une antenne d'émission et de réception de signaux radiofréquences, en liaison avec une station (BT1) de base du réseau (RCEL1) cellulaire. Les stations de base sont, par exemple, des stations de type BTS (Base Transceiver Station) pour le réseau GSM/GPRS ou des stations de type Node B pour le réseau UMTS/HSDPA.

Le réseau (RCEL1) cellulaire réalise ainsi des liaisons de communication entre des terminaux (Ter01, Ter03) reliés au réseau mais aussi des communications vers d'autres réseaux, comme par exemple un autre réseau cellulaire de communication par ondes radiofréquences ou le réseau (WEB1) Internet. Des passerelles (Gat) du réseau (RCEL1) cellulaire de communication par ondes radiofréquences réalisent notamment un pont vers d'autres réseaux. Les passerelles sont par exemple associées à des dispositifs de routage dans chacun des réseaux reliés par la passerelle. Un terminal mobile relié au réseau (RCEL1) cellulaire, comme par exemple le réseau UMTS également désigné par réseau 3G, exécute par exemple, un programme de navigation pour la visite de sites Internet proposés par des serveurs (Ser1, Ser2) Internet. Le terminal peut aussi communiquer avec un ou plusieurs serveurs (Ser1, Ser2) pour des services proposés par son opérateur ou pour réaliser des mises à jour proposées par des fabricants de matériel électronique ou informatique.

Un terminal mobile comprend d'autre part, des modules de communication permettant d'établir des liaisons directes avec d'autres appareils (App1) ou d'autres réseaux (WEB1, LAN1) que son réseau cellulaire de communication par ondes radiofréquences. Ces modules de communication sont par exemple des modules de communication filaire ou de communication sans fils à courte distance par exemple de l'ordre de quelques dizaines de mètres au maximum.

Un module de communication du terminal (Ter03) comprend par exemple une connexion de type USB (Universal Serial Bus) ou de type Firewire ou de type Bluetooth^{®}, le module gérant, par exemple, une liaison (LAPP1) de communication avec un ordinateur ou un appareil électronique.

Un module de communication du terminal (Ter02, Ter04) comprend par exemple une connexion de type Ethernet ou de type Wi-Fi, le module gérant, par exemple, une liaison de communication avec un réseau (LAN1) local, également appelé LAN, ou gérant une liaison de communication avec le réseau (WEB1) Internet. Le terminal mobile établit par exemple une liaison (L2) avec un routeur (RLAN1) d'un réseau local ou établit une liaison (L4) avec un modem routeur (R4) géré par un fournisseur d'accès au réseau (WEB1) Internet.

Une étape (Etp01) d'activation d'un module de commande interactif avec l'environnement, du terminal, est par exemple réalisée par l'utilisateur du terminal. L'utilisateur utilise par exemple une interface graphique interactive du terminal mobile pour l'activation. De manière non limitative, le module de commande interactif avec son environnement peut être activé par un utilisateur du terminal ou par un appareil (DET1) de détection ou d'identification du ou des terminaux mobiles dans un périmètre (PER1) déterminé. Un tel appareil (DET1) de détection est par exemple installé à un domicile ou dans une entreprise. De manière non limitative, l'appareil de détection, en communication avec le terminal mobile, par un de ses modules de communication, réalise une procédure d'identification du terminal ou d'authentification mutuelle avec le terminal mobile, afin d'activer le module de commande interactif avec son environnement. Un tel appareil de détection du terminal est, par exemple, une BTS (Base Transmission Station) personnelle ou appartenant à une entreprise. Un terminal mobile peut aussi se connecter à un commutateur téléphonique privé de type PABX (Private Automatic Branch eXchange) qui déclenche une mise à jour ou une activation d'interfaces logicielles. Le terminal mobile peut aussi se connecter à un appareil multimédia du type UPnP (Universal Plug and Play) ou gérant des accès au réseau Internet ou des flux multimédia.

La détection de la position du terminal dans le périmètre déterminé, peut aussi être réalisée par un module de localisation par satellite, par exemple de type GPS (Global Positioning System). Le module de localisation par satellite comprend, par exemple, des données mémorisées représentatives d'une zone dans laquelle l'interface autoadaptive est activée.

La localisation peut aussi être réalisée par un opérateur de téléphonie mobile localisant un terminal mobile par triangulation, à l'aide de données de puissance d'émission, fournies par des stations de base en liaison avec le terminal. L'activation de l'interface autoadaptative, lorsque le terminal est dans un périmètre déterminé, est par exemple réalisée par un service de localisation supporté par le réseau de l'opérateur. De cette façon des applications à usage local peuvent être proposées par l'opérateur qui peut contrôler et facturer leur usage.

L'appareil de détection de la position du terminal dans un périmètre déterminé peut aussi comprendre une communication par le protocole NFC (Near Field Communication) pour fournir au terminal une donnée d'activation d'interface autoadaptative.

Après (cond01) l'activation du module de commande interactif avec l'environnement, le terminal active, par exemple lors d'une étape (Etp02) suivante, un module d'exploration et de détection des appareils ou réseaux en liaison avec ses modules de communications. Les identifiants des appareils détectés sont par exemple mémorisés dans un fichier (ID_detect) du terminal. De manière non limitative le terminal est, aussi en liaison avec son réseau cellulaire de communication par ondes radiofréquences, par son module de communication par ondes radiofréquences. De manière non limitative, le terminal mobile peut détecter, par ses modules de communication, un ou plusieurs types de protocoles de communication. Les protocoles de communication utilisés sont par exemple du type HTML (HyperText Markup Language) ou XML (extensible Markup Language) ou XHTML (extensible HyperText Markup Language). Un appareil détecté renvoie par exemple un identifiant propre auquel les requêtes du terminal sont adressées. De manière non limitative, l'appareil détecté est conforme à un standard d'interconnexion tel que, par exemple, le standard UPnP (Universal Plug and Play). De manière non limitative, les communications, entre le terminal mobile et un appareil tel qu'un appareil multimédia, peuvent aussi être cryptées selon une clé de cryptage déterminée. De manière non limitative, le terminal fournit, à l'appareil détecté, un mot de passe permettant d'accéder au menu de commande de cet appareil. Une procédure d'authentification mutuelle entre l'appareil en cours de détection et le terminal mobile peut aussi être réalisée.

Un appareil détecté est, par exemple, un appareil domestique comprenant une unité électronique de calcul et un module de communication, pouvant être commandé ou programmé facilement et avec précision. Un ordinateur personnel multimédia peut aussi se connecter au terminal mobile. L'ordinateur personnel comprend, par exemple, une unité de lecture de différents flux numériques multimédias, l'ordinateur étant équipé, d'autre part, d'une unité de diffusion de fichiers ou de flux multimédia destinés à un serveur Internet ou à des terminaux d'une liste de diffusion.

Après la détection (cond02) d'un ou plusieurs appareils le terminal mobile exécute, par exemple l'envoi d'une ou plusieurs requêtes de consultation de commandes disponibles appartenant, par exemple, à un menu de commande proposé par chaque appareil détecté, durant l'étape (Etp03) suivante. L'appareil détecté est, par exemple un modem routeur (R4) de liaison avec le réseau (WEB1) Internet ou un routeur (RLAN1) d'un réseau (LAN1) local ou un autre appareil (APP1) électronique. Un appareil (APP1) électronique détecté peut être un appareil domestique multimédia ou électroménager ou un appareil électronique interactif dans une entreprise. Chaque appareil détecté comprend un module de communication géré par un composant de communication donnant, par exemple, accès à une page ou un menu de commande. De manière non limitative, le menu de commande est conforme à une présentation par kit graphique, également désigné par « template », présentant un contenu de façon paramétrable. Les kits graphiques sont par exemple réalisés en langage PHP (Hypertext Preprocessor) ou en langage CSS (Cascading Style Sheets). De cette façon, un utilisateur arrivant, par exemple à son domicile, détecte tous ses appareils domestiques, par l'activation automatique ou manuelle de son module de détection et de gestion des stimuli, permettant une interaction avec l'environnement du terminal mobile. Un utilisateur arrivant sur un lieu de travail détecte de même les appareils ou les ressources disponibles sur son lieu de travail.

Après (cond03) la réception, par l'appareil détecté, de la requête de consultation du menu de commande, l'appareil renvoie (Etp04) par exemple une réponse à cette requête comprenant un type de commande ou un menu de commandes. De manière non limitative, la réponse comprend aussi un fichier du constructeur ou une référence du constructeur correspondant au type d'appareil détecté. La référence du constructeur de l'appareil est, par exemple son adresse MAC (Media Access Control address). La référence du constructeur comprend par exemple une référence du modèle de l'appareil ainsi qu'une adresse Internet d'un serveur fournissant, par la référence de modèle de l'appareil, un fichier de pilotage de l'appareil ou un fichier comprenant des indications sur l'utilisation des différentes commandes. Ainsi chaque commande peut être associée à une explication ou une étiquette, de façon à être compréhensible par l'utilisateur.

Après la réception (cond04) de la réponse de l'appareil détecté, le terminal mobile consulte, par exemple son fichier (ARCHI) d'archivage, lors d'une étape suivante et compare (Etp05) la référence de l'appareil ou d'un type de commandes avec des références mémorisées. De manière non limitative, si l'appareil détecté par son identifiant ne renvoie pas de référence du constructeur mais seulement une page de commande, la présentation de cette page peut être mémorisée comme page par défaut et associée à l'identifiant de l'appareil, des modifications de présentation pouvant être apportées par l'utilisateur par la suite.

Si la référence fournie dans la réponse correspond (cond051) à une référence archivée, le terminal exécute par exemple, lors d'une étape suivante, une lecture (Etp06) d'un fichier d'interface associé à la référence connue, dans une bibliothèque (BIBLI) d'interfaces logicielles ou de programmes d'interface pour le pilotage de composants de communication du terminal. Le fichier d'interface comprend par exemple une disposition graphique des commandes ou éléments d'information sur l'écran du terminal mobile. De manière non limitative, le fichier d'interface comprend des données de disposition en fonction d'un kit graphique activé du terminal mobile. De manière non limitative, les commandes de l'interface graphique peuvent être réalisées sous la forme d'objets graphiques activables, par exemple par un curseur ou peuvent être associées à des évènements. Une variable est par exemple surveillée de façon périodique pour activer ou désactiver une commande, selon l'état de cette variable. Un évènement peut être, par exemple, un état déterminé de la variable représentative de l'état d'un autre appareil interactif en communication avec le terminal mobile. Un évènement peut aussi être la réception d'un message court de type SMS ou un message multimédia de type MMS. Après (cond06) la détermination du fichier d'interface, le terminal mobile réalise, par exemple, lors d'une étape (Etp07) suivante, l'affichage d'un menu de commande pour le type d'appareil référencé et adressé selon l'identifiant mémorisé de l'appareil.

Si (cond052) après la comparaison de la référence d'appareil reçue, avec les références du fichier d'archivage, aucune référence archivée ne correspond à l'appareil détecté, le terminal mobile réalise, de manière non limitative, un accès (Etp08) à un serveur Internet du constructeur fournissant un fichier de pilotage ou d'indication d'utilisation de l'appareil détecté. Une requête de demande d'informations ou de commandes se rapportant au type d'appareil détecté référencé, est par exemple envoyée (cond08) par le terminal mobile, au serveur du constructeur. Le terminal se place, par exemple, ensuite dans un état (Etp09) d'attente de la réponse du serveur constructeur. Ce serveur envoie par exemple une réponse à la requête comprenant des données de pilotage de l'appareil ou des données d'indication d'utilisation de l'appareil. De manière non limitative, le serveur fournissant le fichier de pilotage ou d'indications d'usage, peut être un serveur d'interfaces, identifiant l'utilisateur du terminal portable, pour fournir des données représentatives d'une interface propre à l'utilisateur permettant la commande du type d'appareil détecté.

Après la réception (cond09) des données de pilotage ou d'indications d'usage, envoyées par le serveur, le terminal exécute par exemple une étape (Etp10) d'apprentissage durant laquelle, les données représentatives du pilotage ou d'indications d'utilisation de l'appareil sont, par exemple sauvegardées dans la bibliothèque et associées à une référence de l'appareil. La référence de l'appareil est, par exemple sauvegardée dans le fichier d'archivage. De manière non limitative, si le serveur du constructeur n'est pas disponible, le terminal peut sauvegarder, en bibliothèque, la page de commande proposée par l'appareil détecté, en association avec sa référence mémorisée dans le fichier (ARCHI) d'archivage. De manière non limitative, l'appareil détecté peut aussi fournir avec sa référence, des données d'indication sur son utilisation. Les indications d'utilisation correspondent, par exemple, à un mode d'emploi consulté par activation d'un objet graphique ou à des légendes explicatives apparaissant sous forme d'étiquettes lorsqu'un objet graphique est pointé.

Après la sauvegarde (cond10) de ces données concernant l'appareil détecté, en mémoire du terminal, le terminal exécute, par exemple, l'étape (Etp07) d'affichage du menu de commande de l'appareil.

De manière non limitative, si plusieurs appareils sont détectés, le terminal exécute, de la même manière, pour chaque appareil l'envoi d'une requête de consultation de commandes disponibles, suivie de l'affichage du menu de commande de l'appareil. De manière non limitative, le terminal peut par exemple afficher, dans un même menu, les commandes d'une pluralité d'appareils. De manière non limitative, l'utilisateur peut aussi permuter les affichages pour passer d'un menu à l'autre. L'appareil détecté est, de manière non limitative, un appareil électronique appartenant ou non à un réseau.

Après l'affichage du menu de commande du ou des appareils détectés, l'utilisateur réalise par exemple l'entrée de commandes, via l'interface utilisateur du terminal. Ainsi de façon avantageuse, chaque appareil identifié est accessible par l'utilisateur à l'aide de son terminal, sans avoir, par exemple, à relié chaque appareil au réseau Internet ou à une unité centrale d'un système de domotique. Des pages de commandes fournies, par exemple directement par l'appareil au terminal ou par l'intermédiaire d'un serveur en réseau, permettent à l'utilisateur de commander directement ces appareils. Des indications d'utilisation, comme par exemple un mode d'emploi, peuvent aussi être fournies par l'appareil détecté ou par un serveur accessible par le terminal, par exemple, via son réseau cellulaire de communication par ondes radiofréquences. Un appareil détecté peut aussi être un dispositif de mesure ou de contrôle fournissant des données d'information.

Un terminal reçoit, par exemple, par l'appareil détecté ou par le serveur Internet associé, un fichier de pilotage, également appelé « driver », utilisable par des programmes exécutés sur le terminal. Le terminal pourra ainsi programmer une commande de l'appareil asservi en fonction de données ou d'un flux de données provenant du réseau Internet ou provenant d'un autre appareil. Après (cond071) la sélection d'une ou plusieurs commandes, ces commandes sont transmises (Etp11) aux appareils identifiés correspondants. Les identifiants mémorisés des appareils sont par exemple des adresses, comme par exemple des adresses IP. Après la transmission (cond11), une attente à l'étape (Etp07) d'affichage du menu de commande est par exemple réalisée.

De manière non limitative, la sélection de la modification de l'affichage graphique peut par exemple être réalisée à la détection d'un évènement ou d'un stimulus. La modification peut alors être réalisée automatiquement sur le menu d'affichage des commandes. A la réception d'un message urgent, l'interface propose par exemple un bouton de commande de lecture immédiate de ce message, le début du message étant par exemple affiché. Le menu de commande précédent est par exemple de nouveau affiché automatiquement après la lecture du message. L'interface homme machine s'adapte ainsi à un mode de fonctionnement sélectionné par l'utilisateur ou à des évènements survenant, par exemple lors des déplacements de l'utilisateur ou lors de la réception de flux d'informations.

De manière non limitative, si les appareils commandés comprennent une page de commande utilisant des kits graphiques, l'utilisateur peut sélectionner (cond072) une commande de modification, suivie d'une étape (Etp12) de modification du menu de commande. Le terminal affiche, par exemple, un menu interactif donnant le choix à l'utilisateur de modifier la présentation en cours ou de modifier le type de kit graphique.

Si (cond121) l'utilisateur entre le choix de modifier le menu en cours, le terminal exécute (Etp13) par exemple un programme de configuration du kit graphique correspondant à ce menu. L'utilisateur déplace par exemple des objets graphiques tels que des boutons, ou associe un objet graphique de commande à un évènement. Après des commandes de modification et une sauvegarde (cond13) de ces modifications, un retour à l'affichage (Etp07) du menu de commande est, par exemple exécuté.

Si (cond122) à l'étape de modification de la présentation, l'utilisateur choisit de modifier le type de kit graphique utilisé, le terminal exécute par exemple une étape (Etp14) de sélection d'une nouveau kit graphique. De manière non limitative, ce nouveau kit graphique est sélectionné à partir d'une bibliothèque mémorisée dans le terminal ou à partir d'une bibliothèque disponible sur un serveur Internet, comme par exemple le serveur d'interfaces logicielles ou de programmes d'interface. Après la validation (cond14) du nouveau kit graphique, une étape suivante de sauvegarde (Etp15) du nouveau kit graphique et d'application de la nouvelle présentation est, par exemple exécutée. Après (cond15) la sauvegarde du nouveau kit graphique, un saut à l'étape (Etp07) d'affichage du menu de commandes, est par exemple exécuté. Ainsi un utilisateur pourra régler son menu de commande en fonction de l'interface graphique homme machine la plus adaptée. De manière non limitative, l'écran est, par exemple un écran tactile permettant d'exécuter des commandes simplement en appuyant sur des liens proposés dans le menu de commande, comme proposé dans une page Internet.

De manière non limitative, durant l'étape d'affichage du menu de commande, le terminal réalise, en parallèle, de façon périodique une étape (Etp20) d'envoi de requêtes de détection d'appareils. A (cond20) la réception des réponses, le terminal compare (Etp21), par exemple, les données reçues avec les identifiants mémorisés (ID_detect) des appareils en interaction avec le menu de commande et d'information. Si (cond211) les identifiants reçus correspondent aux identifiants mémorisés, une étape (Etp22) suivante de temporisation est, par exemple exécutée, puis à la fin (cond22) de la temporisation, un saut est réalisé à l'étape (Etp20) d'envoi des requêtes de détection.

Si (cond212) après la comparaison des identifiants reçus, un appareil précédemment détecté n'est plus détecté, le terminal exécute par exemple une étape (Etp23) de confirmation de non détection de cet appareil, en envoyant une requête de détection correspondant à cet appareil. Si (cond23) l'appareil n'est plus détecté, le terminal exécute par exemple une étape (Etp24) de mise à jour du menu de commande et d'information, dans lequel les commandes relatives à la référence de l'appareil non détecté, sont supprimées. L'affichage du menu de commande et d'information est par exemple interrompu. Un motif indiquant une adaptation à l'environnement est par exemple affiché à l'écran. Après (cond24) une sauvegarde du menu de commande et d'information, le terminal exécute par exemple une étape (Etp25) de reprise de l'affichage du menu de commande et d'information. Après (cond25) l'affichage et l'activation du menu de commande et d'information adapté, un saut à l'étape (Etp22) de temporisation est, par exemple réalisé.

Si (cond213) durant l'étape d'affichage du menu de commande et d'information, le terminal mobile détecte un nouvel appareil, le terminal mobile exécute par exemple une étape (Etp26) d'identification ou d'authentification. Après (cond26) la mémorisation de l'identifiant de l'appareil nouvellement détecté, le terminal exécute, par exemple, une étape (Etp27) d'envoi d'une requête de consultation de commandes disponibles ou d'un menu de commande, à ce nouvel appareil détecté. Après (cond07) la réception de la réponse, le terminal télécharge, par exemple, une ou plusieurs pages de commande de cet appareil, ou des données de pilotage ou d'indication de commande. Le terminal réalise éventuellement une mise à jour de la bibliothèque (BIBLI) du terminal ou du fichier (ARCHI) d'archivage des références. Le terminal exécute ensuite une étape (Etp28) d'interruption de mise à jour de son menu de commande et d'information, durant laquelle des commandes relatives à l'appareil nouvellement détecté sont ajoutées au menu de commande. Après (cond28) la mise à jour du menu de commande et d'information, une étape (Etp29) de reprise de l'affichage du menu de commande et d'information est, par exemple exécuté. Après l'affichage et l'activation (cond29) du menu, un saut à l'étape (Etp22) de temporisation est, par exemple réalisé.

L'interaction avec les appareils de l'environnement du terminal se termine (Etp50) par exemple par la sélection (cond073) d'une commande de désactivation du module de détection et de gestion des stimuli. La désactivation est, par exemple, entrée par un utilisateur via l'interface homme machine du terminal. La désactivation du menu de commande et d'information peut aussi être associée à un évènement, comme par exemple la détection d'une coupure de la liaison avec le dispositif de détection des terminaux mobiles dans un périmètre déterminé. L'évènement déclenchant la désactivation du menu de commande et d'information peut aussi être un message de désactivation envoyé, par exemple, par l'opérateur du réseau cellulaire. Le menu de commande peut aussi être désactivé en partie, certains appareils restant interactifs et d'autres étant verrouillés et inaccessibles. Une commande de désactivation du menu de commande et d'information peut aussi être déclenchée à la fin d'une temporisation ou après l'entrée d'un code erroné par l'utilisateur ou encore par d'autres stimuli.

De manière non limitative, le menu de commande et d'information peut prendre plusieurs formes. Un menu de commande et d'information peut par exemple être représenté sous la forme d'une page similaire à une page Internet. Des boutons de défilement de l'écran vers le haut, le bas, la droite ou la gauche, sont par exemple utilisés pour visualiser différentes parties de la page. Plusieurs pages de commande sont par exemple mises ensemble l'une à côté de l'autre pour former une nouvelle page de commande.

Un menu de commande peut aussi se présenter sous la forme d'un menu interactif de choix d'un ou plusieurs appareils. Après la validation de ces choix, les commandes de ces appareils sont par exemple proposées dans une page de commande, telle qu'une page Internet.

De façon avantageuse, si l'appareil utilise des kits graphiques, le terminal mobile peut alors changer la présentation selon un type de présentation plus ou moins complète ou selon une présentation qui lui est familière. La configuration du menu de commande par l'utilisateur rend notamment l'utilisation de chaque appareil moins complexe et permet à l'utilisateur d'utiliser les appareils avec le meilleur rendement. Un utilisateur ayant des appareils très sophistiqués utilisera, par exemple, un type de présentation le plus complet possible. Une présentation permet, par exemple, de rassembler les commandes selon des ensembles de fonctions, afin d'avoir une utilisation optimum de l'ensemble des appareils. Un utilisateur se trouvant dans un environnement avec des appareils n'étant pas familiers de l'utilisateur, l'utilisateur activera par exemple un kit graphique faisant apparaître les fonctions basiques ou essentielles de chaque appareil, pour prendre connaissance du fonctionnement général de chaque appareil au plus vite.

Un utilisateur pourra aussi changer simplement l'ensemble de ses présentations de façon cohérente en changeant de kit graphique. Un nouveau kit graphique sera, par exemple téléchargé. De façon avantageuse un kit graphique pourra être changé pour des raisons d'organisation de l'utilisateur ou pour des raisons d'esthétique. De manière non limitative, les kits graphiques de présentation sont, par exemple, mémorisés dans le terminal mobile ou les kits graphiques de présentation sont téléchargés chaque fois depuis un site internet. De plus en souscrivant à un service de fourniture d'interfaces logicielles, un utilisateur pourra récupérer une interface de commande fonctionnelle mise à jour en fonction de l'évolution de l'appareil commandé et correspondant à une organisation ou une ergonomie préférentielle précisée par l'utilisateur. Les interfaces de commande peuvent, par exemple, être organisées par métier. Ainsi selon les catégories de métiers, des fonctions sont cachées ou minimisées tandis que d'autres fonctions sont mises au premier plan ou développées. De façon avantageuse un utilisateur professionnel retrouvera son style de bureau quel que soit le lieu de travail et le bureau sera mis à jour pour faire apparaître les ressources disponibles ou des ressources requises pour un mode d'utilisation déterminé. Un utilisateur pourra par exemple activer un mode parmi plusieurs modes de fonctionnement mémorisés (MOD1, MOD2), tels qu'une utilisation à son domicile ou une première utilisation professionnelle, correspondant par exemple à une localisation au bureau principal ou une seconde utilisation professionnelle correspondant par exemple à un déplacement de l'utilisateur et à un lieu géographique non prédéterminé.

Le menu de commande est avantageusement réactif aux changements survenant dans l'environnement de l'utilisateur ou à des évènements. Ainsi le menu de commande paramétrable peut être commandé par des commandes de l'utilisateur utilisant l'interface homme machine du terminal ou par des évènements. Un évènement est, par exemple, une commande vocale réalisée par un kit vocal Bluetooth® de liaison sans fils. Un évènement peut aussi être un franchissement de seuil ou l'appartenance à une plage, pour une variable représentative, par exemple, d'un paramètre physique environnemental produit par un appareil en communication avec le terminal mobile. Ainsi un terminal mobile disposé dans un véhicule automobile, pourra se connecter avec un module d'alerte du véhicule, afin de pouvoir déclencher une interface logicielle d'urgence correspondante. Un terminal mobile sera par exemple personnalisé, via l'interface homme machine du terminal mobile ou le terminal pourra être connecté à un ordinateur pour personnaliser les interfaces de commande, puis charger dans la bibliothèque du terminal, la ou les interfaces de commande disponibles. L'interface de commande du terminal mobile peut ainsi tenir compte des ressources disponibles mais aussi des évènements en fonction de leur priorité relative. L'interface homme machine proposée comprendra par exemple des pointeurs vers des ressources locales ou distantes disponibles, les chemins d'accès à ces ressources étant mis à jour de façon périodique ou évènementielle, garantissant une utilisation optimum de l'interface homme machine.

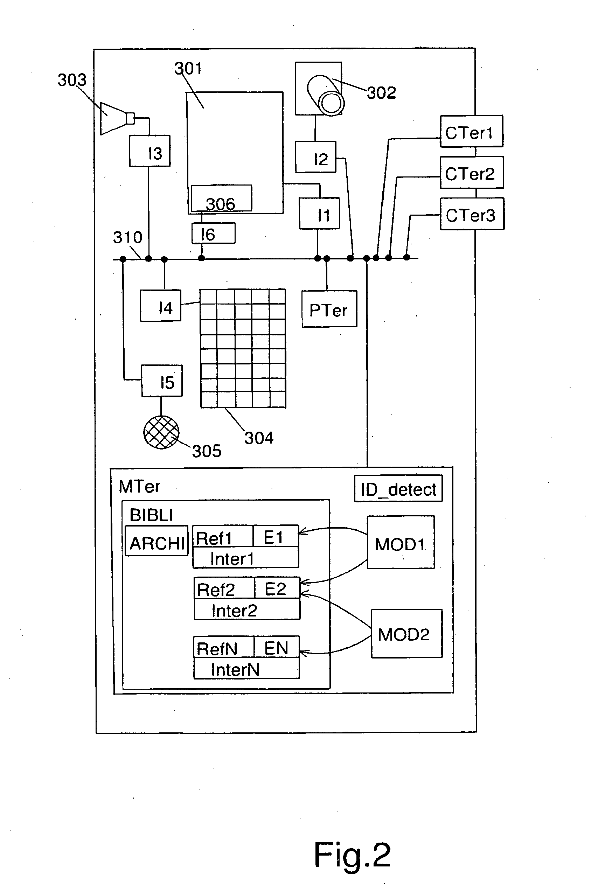

Comme représenté à la figure 2, le terminal mobile comprend, par exemple, une unité (Pter) de calcul en communication via un bus (310) de données, avec une mémoire (MTer) et avec plusieurs composants (I1, 12, I3, I4, I5, I6) intermédiaires de communication. La mémoire comprend, par exemple, une bibliothèque (BIBLI) d'interfaces logicielles comprenant plusieurs données (Inter1, Inter2, InterN) représentatives d'interfaces logicielles. Les références d'interfaces sont par exemple disposées dans un fichier (ARCHI) d'archivage des références d'interfaces. Chaque interface logicielle est, par exemple, associée à sa référence (Ref1, Ref2, RefN) permettant d'accéder à l'interface, pour réaliser le menu de commande et d'information. De manière non limitative, chaque interface logicielle est associée à une donnée (E1, E2, EN) représentative d'un état activé ou désactivé de l'interface, seul les interfaces logicielles activées étant, par exemple utilisées pour réaliser le menu de commande et d'information. De manière non limitative, plusieurs activations successives peuvent par exemple être gérées. Une interface reste, par exemple, active si plusieurs stimuli déclenchent son activation ou si un des stimuli d'activation reste et est détecté. Le module de détection et de gestion des stimuli associe par exemple, des tableaux de stimuli d'activation à chaque référence d'interface logicielle. L'interface logicielle est par exemple désactivée si son tableau associé est vide ou activée si le tableau comprend un ou plusieurs stimuli détectés. Plusieurs tableaux peuvent, par exemple, être combinés pour déclencher une interface logicielle. Un stimulus détecté peut aussi être inscrit dans plusieurs tableaux pour déclencher complètement ou partiellement plusieurs interfaces logicielles.

La mémoire comprend, par exemple, aussi une zone (ID_detect) de stockage des identifiants d'appareils détectés. Une interface logicielle activée correspond par exemple à l'activation par l'utilisateur d'une application exécutée par le terminal, les commandes produites étant adressées par l'identifiant de l'appareil détecté.

La mémoire comprend, par exemple, aussi des données (MOD1, MOD2) représentatives de modes d'utilisation qui correspondent à différentes interfaces logicielles rendues actives. De manière non limitative, une interface logicielle comprend une application correspondante exécutée par le terminal ou une interface logicielle générique pourra être associée à plusieurs applications différentes. Une interface logicielle, par exemple de type « template » ou kit graphique, pourra par exemple être créée ou modifiée, par exemple pour changer la disposition des menus ou des commandes pour une application de commande ou de contrôle associée.

Différents éléments interactifs sont commandées, de manière non limitative, par une interface logicielle de communication avec l'utilisateur : le terminal mobile comprend par exemple un microphone (305) d'enregistrement de la voix de l'utilisateur, un haut-parleur (303), un écran (301) d'affichage, un clavier (304), une dalle tactile (306) ou une caméra (302). Chacun des éléments interactifs, pilotés par l'interface logicielle, est, de manière non limitative, en communication avec le bus de données, via son composant intermédiaire de communication. Chacun des composants ou modules du terminal mobile, à l'exception de l'unité de calcul, est contrôlé par un dispositif de contrôle non représenté ou par l'unité (PTer) de calcul. L'unité de calcul est, par exemple, un circuit intégré de type ASIC ou un microcontrôleur ou un processeur qui traite des données sous forme numérique. Le terminal mobile comprend, de manière non limitative, plusieurs composants (CTer1, CTer2, CTer3) de communication avec l'extérieur, reliées au bus (310) de données pour recevoir ou fournir des données représentatives de données échangées avec l'extérieur du terminal.

Les composants de communication avec l'extérieur comprennent par exemple chacune un module de modulation et un module de démodulation. Le signal en entrée du module de modulation ou en sortie du module de démodulation, comprend par exemple différentes données dépendantes, de manière non limitative, du protocole de communication et de l'information transmise. Le terminal peut ainsi géré simultanément ses différents composants de communication. L'écran, le haut-parleur ou éventuellement d'autres voyants permettent de multiples combinaisons pour communiquer des informations à l'utilisateur. Différentes sonneries ou différentes langues sont, par exemple gérées par le terminal mobile. Le terminal mobile peut ainsi créer différents évènements associés par exemple à l'appui sur une touche déterminée ou à l'état de remplissage de la mémoire ou au niveau d'énergie de la batterie du terminal mobile.

De manière non limitative, un composant de communication à faible distance, par exemple, du type Bluetooth® permet de détecter des appareils et de les commander. Un composant de communication, par exemple, du type Wi-Fi ou en liaison avec le réseau de communication par ondes radiofréquences, permettra de manière non limitative, d'accéder à un serveur d'interface ou à un serveur de mise à jour des modes d'utilisation ou un serveur de mise à jour du menu de commande.

Selon un exemple de réalisation, le serveur de mise à jour du menu de commande ou le serveur d'interfaces logicielles ou le serveur de mise à jour des modes d'utilisation, peuvent aussi être un serveur accédé localement, par exemple par une communication de type Bluetooth®. Les signaux d'excitation déterminés correspondant à des stimuli pour un module de détection et de gestion des stimuli, sont par exemple des signaux reçus via le réseau cellulaire de communication par ondes radiofréquences. D'autres exemples de voies de communication utilisées seront décrits par la suite.

De manière non limitative, la transformation de menus de commande correspond à une couche supplémentaire de protocole de communication, en relation avec un kit graphique actif de la bibliothèque du terminal. L'activation du module de détection et de gestion des stimuli correspond, par exemple, à l'activation de cette couche logicielle supplémentaire. Cette solution logicielle est, par exemple mise en oeuvre par l'implantation dans la carte SIM (Subscriber Identity Module) ou en mémoire du terminal mobile, d'un programme de gestion de cette couche logicielle supplémentaire.

Des données représentatives de différents modes d'utilisation, sont par exemple mémorisées, chaque mode réalisant, par exemple, l'activation d'une ou plusieurs interfaces. Un mode d'utilisation est, par exemple, personnalisé par l'utilisateur ou chargé par un serveur distant dans le terminal mobile. De façon avantageuse les différents modes d'utilisation mémorisés avec des interfaces logicielles, dans un serveur distant, sont associées, dans une base de données, à des données représentatives du type du terminal mobile ou d'un identifiant personnel de l'utilisateur ou d'un identifiant professionnel. De façon avantageuse un utilisateur pourra charger, dans un terminal mobile, différentes interfaces logicielles correspondant à un environnement déterminé ou à une activité professionnelle déterminée ou à un type de terminal utilisé.

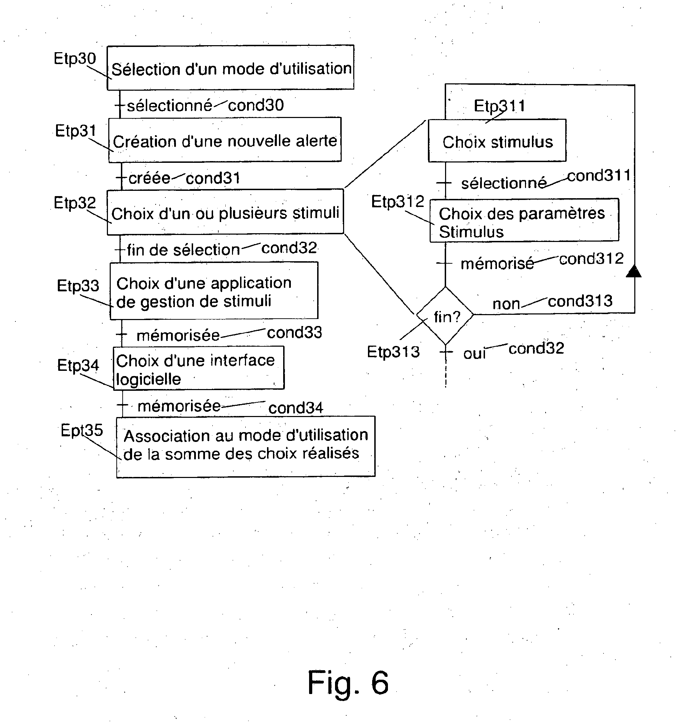

La figure 6 représente un exemple non limitatif de configuration d'un mode d'utilisation. L'utilisateur exécute, par exemple une étape (Etp30) de sélection d'un mode d'utilisation. De manière non limitative, un mode (MOD1, MOD2) mémorisé existant est sélectionné par l'utilisateur ou un nouveau mode d'utilisation est créé, en utilisant un menu interactif du terminal mobile.

Après la sélection (cond30) du mode d'utilisation, l'utilisateur exécute, par exemple, une étape (31) de création d'une nouvelle alerte, en utilisant un menu interactif proposé par le terminal mobile. De manière non limitative, une alerte existante peut aussi être modifiée ou supprimée par l'utilisateur.

Après la création (cond31) de la nouvelle alerte, l'utilisateur exécute, par exemple une étape (Etp32) suivante de sélection d'un ou plusieurs stimuli. Un stimulus choisi peut être de différents types. Un stimulus peut, par exemple être un signal d'alerte produit par le terminal mobile en fonction de données représentatives :
- du niveau d'énergie en réserve dans le terminal mobile ou,
- de l'heure ou de la date ou d'une temporisation.

Un stimulus peut par exemple être déclenché si le niveau d'énergie est inférieur à un niveau déterminé correspondant à une durée restante de fonctionnement critique. La durée critique peut par exemple être réglée comme paramètre réglable de ce stimulus. Une conséquence est par exemple le lancement d'une application de présentation des menus en mode texte avec suppression d'alarme de type vibreur consommant beaucoup d'énergie. L'heure ou la date peuvent par exemple être utilisées pour passer d'un mode professionnel dans la journée, à un mode d'utilisation personnel le matin et en soirée.

Un stimulus peut aussi correspondre à la réception d'un signal d'excitation. Différents signaux d'excitation peuvent être reçus par différents composants d'interface de communication.

Un courrier électronique ou un témoin selon le protocole de communication HTTP, également appelé « cookie », ou un message court de type SMS ou un message multimédia de type MMS, peut par exemple être sélectionné comme signal d'excitation reçu. L'expéditeur du message ou l'objet du message peuvent, par exemple, être réglés comme paramètres du stimulus pour déclencher une application associée. Le terminal mobile exécute, par exemple, une application de gestion des courriers électroniques commandée par une interface spécifique aux courriers électroniques, à la réception d'un courrier électronique. De manière non limitative, le courrier électronique est, par exemple reçu via une interface de communication Wi-Fi reliée au réseau Internet ou par une interface de communication dans le réseau cellulaire de communication par ondes radiofréquences.

La réception d'un SMS déterminé est par exemple utilisée pour déclencher des modes d'utilisation ou des applications. Un opérateur de téléphonie mobile peut par exemple, déclencher une application de réception et d'affichage d'un flux vidéo, par exemple par un composant d'interface de communication avec le réseau UMTS. Ainsi un message vidéo d'alerte peut être diffusé automatiquement sur les terminaux mobiles. Un terminal mobile peut aussi recevoir des flux d'informations vidéo correspondant à des bulletins d'information ou à d'autres types d'informations.

Un stimulus peut aussi comprendre la réception d'un signal par le protocole de communication NFC (Near Field Communication), par exemple au passage du terminal devant une borne de contrôle d'accès. Ainsi le terminal pourra être identifié à son entrée dans une zone dont l'accès est contrôlé et en même temps activer une ou plusieurs applications commandées par une interface interactive spécifique à la zone dont l'accès est contrôlé. De même des applications actives à l'intérieur de la zone à accès contrôlé, peuvent être désactivées en sortant de cette zone, au passage du portique de sortie de la zone. La zone à accès contrôlée est, par exemple une entreprise ou une zone comprenant un réseau local basé sur des communications radiofréquences.

Le stimulus peut aussi comprendre la lecture d'un code à barres déterminé par une caméra ou un lecteur optique du terminal mobile.

Un stimulus peut aussi comprendre la réception d'un signal émis par un appareil, comme par exemple un appareil de mesure ou un appareil multimédia, pouvant être contrôlé ou commandé à distance. La réception de ce signal identifié par le terminal mobile, permet par exemple, d'exécuter une application de visualisation ou d'exploitation de mesures. Une application de commande de l'appareil détecté peut aussi être exécutée. L'utilisateur active, par exemple, les commandes de l'application par une interface déterminée chargée par le terminal mobile, depuis sa bibliothèque d'interface. De manière non limitative, l'application de commande d'un appareil, par le terminal mobile, peut être un navigateur Internet, l'appareil commandé ou consulté comprenant une adresse IP et proposant un menu, par exemple de type HTML.

Le stimulus peut aussi comprendre la lecture d'une balise déterminée, également appelée « tag » en anglais. Un paramétrage du stimulus comprend, par exemple, le réglage de balises d'alerte pour déclencher des applications déterminées. Ainsi un ou plusieurs stimuli peuvent être utilisés et paramétrés pour déclencher une ou plusieurs applications correspondant à un mode d'utilisation, en relation avec les stimuli. Une interface spécifique pour l'utilisation de l'application peut aussi être réglée, modifiée et sauvegardée.

Le choix des stimuli comprend par exemple une étape (Etp311) de choix d'un stimulus, par exemple, dans une liste de média gérés par le terminal mobile. Après la sélection (cond311) d'un stimulus, comme par exemple un signal d'excitation déterminé, l'utilisateur exécute, par exemple, une étape (Etp312) suivante de paramétrage du stimulus. Le paramétrage comprend par exemple le réglage d'une plage de valeur ou d'un seuil.

Après la mémorisation (cond312) des paramètres associés au stimulus, le choix de sélectionner un nouveau stimulus est, par exemple, proposé à l'utilisateur lors d'une étape (Etp313) suivante.

Si l'utilisateur entre le choix de continuer (cond313) la sélection d'un nouveau stimulus, un saut est, par exemple réalisé à l'étape (Etp311) de choix d'un stimulus.

Si l'utilisateur spécifie la fin de la sélection (cond32), une étape (Etp33) suivante de choix d'une application à exécuter en réponse au stimulus sélectionné ou à l'ensemble des stimuli sélectionnés, est par exemple exécutée.

Après la sélection et la mémorisation (cond33) de l'application à exécuter, une étape (Etp34) suivante de choix d'une interface logicielle dans la bibliothèque d'interfaces est, par exemple, exécutée.

Après la mémorisation (cond34) de l'interface logicielle, une étape (Etp35) suivante d'association au mode d'utilisation, de l'ensemble des choix successifs réalisés et de mémorisation de ces choix est, par exemple réalisée.

De manière non limitative, différentes interfaces logicielles pourront être associées à une application ou le choix d'une interface logicielle pourra être réalisé directement, l'interface logicielle étant associée à une application unique déterminée. Ainsi un utilisateur pourra télécharger une interface de travail déterminée quelle que soit la station de travail utilisée, par une communication avec un serveur d'interfaces logicielles prenant en compte, dans sa base de données, l'identifiant personnel ou professionnel de l'utilisateur, ainsi que l'identifiant du type de terminal mobile utilisé. Pour un particulier, le téléchargement d'une interface logicielle permet par exemple de configurer automatiquement son terminal mobile, en retrouvant son répertoire, son agenda ou ses configurations personnelles. Un utilisateur peut ainsi exécuter automatiquement les outils de communication avec sa communauté.

Une interface logicielle peut aussi pointer sur une application, l'application pointée pouvant être réglée. Le pointeur est par exemple une adresse interne au terminal mobile ou une adresse externe, par exemple de type URL (Uniform Resource Locator). L'interface logicielle correspond, par exemple, à une application exécutée dans le terminal mobile ou à une application exécutée par un appareil ou un serveur distant.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de communication exécuté par un terminal (Ter02, Ter03, Ter04) mobile dans son environnement comprenant au moins un appareil distant, le terminal mobile comprenant un composant (PTer) de traitement communiquant avec un composant (MTer) de mémorisation et au moins un composant (CTer1, CTer2, CTer3) de communication, caractérisé en qu'il comprend :
- une étape (Etp02) de détection, par le terminal mobile, d'un signal d'excitation provenant de l'appareil distant communiquant avec le terminal par le composant de communication, comprenant la mémorisation d'un identifiant de cet appareil distant,
- une étape de consultation (Etp06) d'une bibliothèque d'interfaces logicielles du terminal mobile, d'activation d'au moins une des interfaces logicielles correspondant à une référence associée à l'appareil distant et d'association de cette interface logicielle à l'identifiant de l'appareil distant et
- une étape (Etp07) d'affichage, en fonction d'au moins l'interface activée, d'un menu de commande et d'information, activable par l'utilisateur du terminal mobile.

2. Procédé de communication selon la revendication 1, **caractérisé en ce que** l'étape de consultation de la bibliothèque d'interfaces logicielles du terminal mobile est précédée de :
- une étape (Etp03) d'envoi, par le terminal mobile, à l'appareil identifié d'une requête de demande de commandes disponibles,
- une étape (Etp04) d'envoi, par l'appareil identifié, d'une réponse comprenant au moins la référence associée à l'appareil distant, fournie par l'appareil distant et correspondant à un type de commandes disponibles et
- une étape de sauvegarde de la réponse, par le terminal mobile.

3. Procédé selon la revendication 2, **caractérisé en ce que** l'étape de consultation de la bibliothèque comprend au moins :
- une étape (Etp05) de comparaison d'au moins la référence fournie, relative aux commandes disponibles, avec des références d'un fichier d'archivage de la bibliothèque, et
- la lecture (Etp06) de l'interface logicielle associée à ladite référence fournie dans la bibliothèque, activée et utilisée pour le menu de commande et d'information, si le fichier d'archivage comprend une référence correspondant à la référence fournie, ou
- si le fichier d'archivage ne comprend pas de référence correspondant à ladite référence fournie, une étape d'extraction dans la réponse, d'une adresse d'un serveur d'interfaces logicielles, suivie d'une étape (Etp08) d'envoi, par le terminal mobile, au serveur d'interfaces logicielles, d'une requête d'interface logicielle associée à la référence fournie, et suivie d'une étape (Etp10) de sauvegarde dans la bibliothèque et d'activation d'une interface logicielle fournie par le serveur d'interfaces logicielles, associée à la référence fournie par l'appareil distant et mémorisée dans le fichier d'archivage.

4. Procédé selon l'une des revendications 1 à 3, **caractérisé en ce qu'**il est suivi d'une étape d'envoi d'une requête comprenant une des commandes de l'appareil détecté, ou une des commandes d'un serveur en communication avec l'appareil détecté, par l'utilisation du menu de commande et d'information, la requête comprenant la commande étant envoyée à l'appareil détecté par son identifiant.

5. Procédé selon l'une des revendications 1 à 4, **caractérisé en ce que** l'étape de détection du signal d'excitation est précédée d'une étape (Etp01) d'activation d'un module de détection et de gestion des stimuli, l'activation du module de détection et de gestion des stimuli, étant réalisée par un dispositif (DET1) extérieur de détection du terminal mobile dans un périmètre (PER1) déterminé, ce dispositif extérieur transmettant au moins un signal d'activation du module de détection et de gestion des stimuli.

6. Procédé selon la revendication 5, **caractérisé en ce que** le dispositif extérieur de détection autorise l'activation du module de détection et de gestion des stimuli, après des étapes d'authentification mutuelle entre le terminal mobile et le dispositif extérieur de détection du terminal dans le périmètre déterminé.

7. Procédé selon l'une des revendications 1 à 6, **caractérisé en ce qu'**il comprend une personnalisation par l'utilisateur du menu de commande par :
- une étape (Etp32) de sélection d'un ou plusieurs stimuli chacun représentatif d'un signal déterminé produit par un appareil distant dont un identifiant est mémorisé dans le terminal mobile,
- une étape (Etp33) de sélection d'une ou plusieurs applications dont les références sont mémorisées dans le terminal mobile, pour être associées à la détection du ou des stimuli sélectionnés,
- une étape (Etp34) de sélection d'au moins une des interfaces logicielles qui comprend un ensemble interactif d'activation de fonctions de la ou des applications sélectionnées,
- une étape (Etp35) de mémorisation et d'association des sélections de stimuli, d'applications et de fonctions dans l'interface logicielle, pour définir un mode d'adaptation du menu de commande et d'information, l'interface logicielle sélectionnée étant intégrée au menu de commande et d'information à la détection du ou des stimuli sélectionnés, pour accéder aux applications sélectionnées.

8. Procédé selon la revendication 7, **caractérisé en ce qu'**il est suivi d'une étape de transfert de données représentatives du menu de commande et d'information et de ses modes d'adaptation, vers un serveur distant d'archivage en communication avec le terminal mobile, l'archivage dans le serveur d'archivage étant réalisé en fonction des stimuli, des applications, des interfaces et de leurs fonctions, associés à un type de terminal mobile et à un identifiant personnel de l'utilisateur ou un identifiant d'une profession de l'utilisateur.

9. Procédé selon la revendication 8, **caractérisé en ce qu'**il est précédé de :
- une étape d'envoi d'une requête de mise à jour de la bibliothèque d'interfaces, ou respectivement de mise à jour du menu de commande et d'information, cette requête comprenant l'identifiant personnel de l'utilisateur ou l'identifiant de la profession de l'utilisateur,
- une étape de téléchargement depuis le serveur distant en communication avec le terminal, en fonction de l'identifiant personnel de l'utilisateur ou de l'identifiant de la profession de l'utilisateur, de la bibliothèque d'interfaces logicielles mémorisée dans le terminal, ou respectivement de données de mise à jour du menu de commande et d'information.

10. Procédé selon l'une des revendications 1 à 9, **caractérisé en ce que** l'affichage du menu de commande et d'information est réalisé en parallèle d'une détection des appareils environnants actifs comprenant :
- une étape (Etp20) d'envoi de requêtes de demande d'identifiants des appareils environnants,
- une étape (Etp21) de comparaison des identifiants reçus avec les identifiants précédemment mémorisés,
- une étape (Etp24, Etp28) d'interruption d'affichage du menu de commande et de mise à jour du menu de commande et d'information si un identifiant précédemment mémorisé est manquant ou si un identifiant supplémentaire est détecté par rapport aux identifiants précédemment mémorisés, et
- une étape (Etp25, Etp29) d'activation de l'affichage du menu de commande et d'information mis à jour.

11. Procédé selon l'une des revendication 1 à 10, **caractérisé en ce qu'**il comprend la gestion d'une pluralité de composants de communication et la gestion d'une pluralité d'appareils communiquant avec le terminal mobile chacun par un des composants de communication.

12. Terminal mobile comprenant au moins un composant (PTer) de traitement communiquant avec une mémoire (MTer) et un composant (Cter1, Cter2, Cter3) de communication, **caractérisé en ce qu'**il comprend :
- une bibliothèque (BIBLI) d'interfaces logicielles associées chacune à une référence (Ref1, Ref2, RefN) d'interface et à un attribut (E1, E2, EN) représentatif d'un état actif ou passif de l'interface logicielle,
- un module d'exploration et de détermination d'identifiants d'appareils distants, réalisant une acquisition d'au moins un identifiant d'un appareil distant, après une détection, via le composant de communication, d'un signal d'excitation émis par cet appareil distant,
- un module de consultation de la bibliothèque (BIBLI) d'interfaces logicielles, rendant actif l'attribut représentatif de l'état de l'interface logicielle correspondant à une référence associée à l'appareil distant et d'association de cet interface logicielle activée à l'identifiant de l'appareil distant,
- un module de chargement d'une ou plusieurs des interfaces logicielles activées, pour réaliser un menu interactif de commande et d'information activable par un utilisateur du terminal mobile.

13. Terminal mobile selon la revendication 12, **caractérisé en ce que** le module d'exploration et de détermination d'identifiants d'appareils (APP1) distants réalise une acquisition de la référence associée à l'appareil distant, fournie par l'appareil distant et correspondant à au moins un type de commandes disponibles pour l'appareil distant détecté.

14. Terminal mobile selon la revendication 12 ou 13, **caractérisé en ce qu'**il comprend un module de chargement de la bibliothèque (BIBLI) d'interfaces, en communication avec un serveur d'interfaces logicielles fournissant des données d'interfaces logicielles en fonction d'un identifiant personnel de l'utilisateur ou d'un identifiant professionnel de l'utilisateur ou d'un identifiant du type de terminal.

15. Terminal mobile selon la revendication 12 à 14, **caractérisé en ce qu'**il comprend :
- des données mémorisées représentatives de stimuli,
- des données mémorisées représentatives d'applications fournissant des services,
- un module de personnalisation proposant successivement par le menu de commande et d'information, des éléments représentatifs de stimuli sélectionnables, puis des éléments représentatifs d'applications sélectionnables pour être associées à la détection du ou des stimuli sélectionnés, puis des éléments représentatifs d'interfaces sélectionnables comprenant chacune des fonctions d'activations de l'application sélectionnée, le module de personnalisation réalisant ensuite une mémorisation du ou des stimuli sélectionnés associés à l'application sélectionnée et à l'interface sélectionnée.

16. Terminal mobile selon la revendication 15, **caractérisé en ce qu'**un stimulus sélectionné correspond à des données représentatives d'un signal d'excitation, transmis par le composant de communication, représentatif de :
- une valeur appartenant à une plage d'alerte déterminée ou
- une valeur dépassant un seuil d'alerte déterminé
- un identifiant de l'appareil distant ou du type de l'appareil distant duquel provient le signal.

17. Terminal mobile selon l'une des revendications 12 à 16, **caractérisé en ce qu'**il comprend un module de sélection d'un mode (MOD1, MOD2) d'utilisation parmi une pluralité de modes d'utilisation, chaque mode d'utilisation étant associé à une ou plusieurs interfaces (Inter1, Inter2, Inter3) logicielles activées, réalisant le menu interactif de commande et d'information, un mode d'utilisation étant personnalisé ou associé à un usage déterminé de l'utilisateur, chaque mode d'utilisation pouvant être activé par l'utilisateur, les modes d'utilisation étant mémorisés sous la forme de données représentatives pour être téléchargées ou archivées ou modifiées et sauvegardées, l'activation d'un mode de sélection pouvant être associée à une détection d'un signal de déclenchement.

18. Terminal mobile selon l'une des revendications 12 à 17, **caractérisé en ce qu'**il comprend une pluralité de composants (CTer1, Cter2, CTer3) de communication dont au moins :
- un composant de communication avec un réseau cellulaire de communication par ondes radiofréquences et
- un composant de communication sans contact, à courte distance avec des appareils de son environnement proche.

19. Système de communication comprenant un terminal mobile selon l'une des revendications 12 à 18, **caractérisé en ce qu'**il comprend au moins un serveur d'interfaces logicielles de commande comprenant une base de données d'interfaces logicielles, les champs de la base de données comprenant pour chaque interface logicielle :
- une ou plusieurs références d'applications compatibles ou,
- une ou plusieurs références de types de terminaux (Ter01, Ter02, Ter04, Ter03) mobiles compatibles ou,
- un ou plusieurs identifiants professionnels de l'utilisateur ou,
- un ou plusieurs identifiants personnels de l'utilisateur.

20. Système de communication selon la revendication 19, **caractérisé en ce qu'**il comprend un dispositif (DET1) de détection du terminal dans une zone déterminée, autorisant la ou les communications à courte distance du terminal mobile, après une authentification mutuelle avec le terminal mobile.

21. Système de communication selon la revendication 19 ou 20, **caractérisé en ce qu'**il comprend un dispositif central de gestion de ressources disponibles, en communication avec le terminal (Ter1, Ter2, Tuer3, Ter4) mobile, transmettant au terminal mobile un signal d'excitation comprenant des données représentatives des ressources et des commandes disponibles.

## Patentansprüche

1. Kommunikationsverfahren, das durch ein mobiles Endgerät (Ter02, Ter03, Ter04) in seiner Umgebung ausgeführt wird, die zumindest einen entfernten Apparat enthält, wobei das mobile Endgerät eine Verarbeitungskomponente (PTer) enthält, die mit einer Speicherkomponente (MTer) und zumindest einer Kommunikationskomponente (CTer1, CTer2, CTer3) kommuniziert,
**dadurch gekennzeichnet, dass** es enthält:
- einen Schritt (Etp02) des Erfassens eines Erregersignals, das von dem entfernten Apparat kommt, der mit dem Endgerät über Kommunikationskomponente kommuniziert, durch das mobile Endgerät, enthaltend das Speichern eines Identifikators dieses entfernten Apparates,
- einen Schritt (Etp06) des Konsultierens einer Bibliothek von Softwareschnittstellen des mobilen Endgeräts, des Aktivierens zumindest einer der Softwareschnittstellen, die einer Referenz entspricht, die dem entfernten Apparat zugeordnet ist, und des Zuordnens dieser Softwareschnittstelle zu dem Identifikator des entfernten Apparates und
- einen Schritt (Etp07) des Anzeigens eines Bedien- und Informationsmenüs, das durch den Benutzer des mobilen Endgeräts aktivierbar ist, in Abhängigkeit von zumindest der aktivierten Schnittstelle.

2. Kommunikationsverfahren gemäß Anspruch 1, **dadurch gekennzeichnet, dass** dem Schritt des Konsultierens der Bibliothek von Softwareschnittstellen des mobilen Endgeräts vorangeht:
- ein Schritt (Etp03) des Sendens eine Anforderung einer Abfrage verfügbarer Befehle durch das mobile Endgerät an den identifizierten Apparat,
- ein Schritt (Etp04) des Sendens einer Antwort durch den identifizierten Apparat, die zumindest die Referenz enthält, die dem entfernten Apparat zugeordnet ist, von dem entfernten Apparat geliefert wird und einem Typ verfügbarer Befehle entspricht, und
- ein Schritt des Speicherns der Antwort durch das mobile Endgerät.

3. Verfahren gemäß Anspruch 2, **dadurch gekennzeichnet, dass** der Schritt des Konsultierens der Bibliothek zumindest enthält:
- einen Schritt (Etp05) des Vergleichens zumindest der gelieferten Referenz, die sich auf die verfügbaren Befehle bezieht, mit Referenzen einer Archivdatei der Bibliothek, und
- wenn die Archivdatei eine Referenz enthält, die der gelieferten Referenz entspricht, Lesen (Etp06) der Softwareschnittstelle, die dieser gelieferten Referenz in der Bibliothek zugeordnet ist, aktiviert ist und für das Bedien- und Informationsmenüs verwendet wird, oder
- wenn die Archivdatei keine Referenz enthält, die der gelieferten Referenz entspricht, einen Schritt des Extrahierens einer Adresse eines Servers von Softwareschnittstellen aus der Antwort, gefolgt von einem Schritt (Etp08) des Sendens von Softwareschnittstellen einer Anforderung einer Softwareschnittstelle, die der gelieferten Referenz zugeordnet ist durch das mobile Endgerät an den Server, und gefolgt von einem Schritt (Etp10) des Speicherns in der Bibliothek und des Aktivierens einer Softwareschnittstelle, die von dem Server von Softwareschnittstellen geliefert wird, der von dem entfernten Apparat gelieferten Referenz zugeordnet ist und in der Archivdatei gespeichert ist.

4. Verfahren gemäß einem der Ansprüche 1 bis 3, **dadurch gekennzeichnet, dass** ihm ein Schritt folgt des Sendens einer Anforderung, die einen der Befehle des erfassten Apparates oder einen der Befehle eines Servers, der mit dem erfassten Apparat in Kommunikation ist, enthält zur Verwendung des Bedien- und Informationsmenüs, wobei die Anforderung den Befehl enthält, der dem Apparat gesendet wurde, der über seinen Identifikator erfasst wurde.

5. Verfahren gemäß einem der Ansprüche 1 bis 4, **dadurch gekennzeichnet, dass** dem Schritt des Erfassens des Erregersignals ein Schritt (Etp01) vorausgeht des Aktivierens eines Erfassungs- und Stimulusverwaltungsmoduls, wobei das Aktivieren des Erfassungs- und Stimulusverwaltungsmoduls durch eine äußere Erfassungsvorrichtung (DET1) des mobilen Endgeräts in einer vorbestimmten Umgebung (PER1) durchgeführt wird, wobei die äußere Vorrichtung zumindest ein Signal zum Aktivieren des Erfassungs- und Stimulusverwaltungsmoduls überträgt.

6. Verfahren gemäß Anspruch 5, **dadurch gekennzeichnet, dass** die äußere Erfassungsvorrichtung das Aktivieren des Erfassungs- und Stimulusverwaltungsmoduls autorisiert nach Schritten des gegenseitigen Authentifizierens zwischen dem mobilen Endgerät und der äußere Erfassungsvorrichtung des Endgeräts in der vorbestimmten Umgebung.

7. Verfahren gemäß einem der Ansprüche 1 bis 6, **dadurch gekennzeichnet, dass** es ein Personalisieren des Bedien- und Informationsmenüs durch den Benutzer enthält mit:
- einem Schritt (Etp32) des Auswählens eines oder mehrerer Stimuli, von denen jeder repräsentativ für ein vorbestimmtes Signal ist, das von einem entfernten Apparat erzeugt wird, dessen Identifikator in dem mobilen Endgerät gespeichert ist,
- einem Schritt (Etp33) des Auswählen einer oder mehrerer Anwendungen, deren Referenzen in dem mobilen Endgerät gespeichert sind, um der Erfassung des oder der ausgewählten Stimuli zugeordnet zu werden,
- einem Schritt (Etp34) des Auswählen zumindest einer der Softwareschnittstellen, die eine interaktive Gesamtheit des Aktivieren von Funktionen der gewählten Anwendung oder Anwendungen enthält,
- einem Schritt (Etp35) des Speicherns und Zuordnens der Auswahlen von Stimuli, Anwendungen und Funktionen in der Softwareschnittstelle zum Definieren einer Weise des Adaptierens des Bedien- und Informationsmenüs, wobei die gewählte Softwareschnittstelle beim Erfassen des oder der ausgewählten Stimuli in dem Bedien- und Informationsmenüs integriert ist, um auf die ausgewählten Anwendungen zuzugreifen.

8. Verfahren gemäß Anspruch 7, **dadurch gekennzeichnet, dass** ihm ein Schritt folgt des Übertragens von Daten, die für das Bedien- und Befehlsmenü und seine Adaptionsweisen repräsentativ sind, zu einem entfernten Archivserver, der in Kommunikation mit dem mobilen Endgerät ist, wobei das Archivieren in dem Archivserver durchgeführt wird in Abhängigkeit von den Stimuli, den Anwendungen, den Schnittstellen und ihren Funktionen, die einem Typ von mobilen Endgeräten und einem persönlichen Identifikator des Benutzers oder einem Identifikator eines Berufs des Benutzers zugeordnet sind.

9. Verfahren gemäß Anspruch 8, **dadurch gekennzeichnet, dass** ihm vorausgeht:
- ein Schritt des Sendens einer Anforderung zum Aktualisieren der Schnittstellenbibliothek, oder auch des Aktualisierens des Bedien- und Informationsmenüs, wobei diese Anforderung den persönlichen Identifikator des Benutzers oder den Identifikator des Berufs des Benutzers enthält,
- ein Schritt des Herunterladens von dem entfernten Server, der in Kommunikation mit dem Endgerät ist, der Bibliothek von Softwareschnittstellen, die in dem Endgerät gespeichert ist, oder auch von Daten zum Aktualisieren des Bedien- und Informationsmenüs, abhängig von dem persönlichen Identifikator des Benutzers oder dem Identifikator des Berufs des Benutzers.

10. Verfahren gemäß einem der Ansprüche 1 bis 9, **dadurch gekennzeichnet, dass** die Anzeige des Bedien- und Informationsmenüs parallel zu einem Erfassen von aktiven umgebenden Apparaten durchgeführt wird, dass enthält:
- einen Schritt (Etp20) des Sendens von Anforderungen zur Abfrage von Identifikatoren der umgebenden Apparate,
- einen Schritt (Etp21) des Vergleichens der empfangenen Identifikatoren mit den vorher gespeicherten Identifikatoren,
- einen Schritt (Etp24, Etp28) des Unterbrechens der Anzeige des Bedien- und Informationsmenüs und des Aktualisierens des Bedien- und Informationsmenüs, wenn ein vorher gespeicherte Identifikator fehlt oder wenn ein ergänzender Identifikator erfasst wird mit Bezug auf vorher gespeicherte Identifikatoren, und
- einen Schritt (Etp25, Etp29) des Aktivierens der Anzeige des aktualisierten Bedien- und Informationsmenüs.

11. Verfahren gemäß einem der Ansprüche 1 bis 10, **dadurch gekennzeichnet, dass** es das Verwalten einer Mehrzahl von Kommunikationskomponenten und das Verwalten einer Mehrzahl von Apparaten enthält, von denen jeder über eine der Kommunikationskomponenten mit dem mobilen Endgerät kommuniziert.

12. Mobiles Endgerät, das zumindest eine Verarbeitungskomponente (PTer) enthält, die mit einer Speicherkomponente (MTer) und zumindest einer Kommunikationskomponente (CTer1, CTer2, CTer3) kommuniziert,
**dadurch gekennzeichnet, dass** es enthält:
- eine Bibliothek (BIBLI) von Softwareschnittstellen, von denen jeder eine Schnittstellenreferenz (Ref1, Ref2, RefN) und ein Attribut (E1, E2, EN) zugeordnet ist, das repräsentativ für einen aktiven oder passiven Zustand der Softwareschnittstelle ist,
- ein Modul zum Erkunden und Erfassen von Identifikatoren entfernter Apparate, das eine Akquirierung zumindest eines Identifikators eines entfernten Apparates durchführt nach einem Erfassen eines Erregersignals, das von diesem entfernten Apparat gesendet wurde, über die Kommunikationskomponente,
- ein Modul zum Konsultieren der Bibliothek von Softwareschnittstellen (BIBLI), das das Attribut aktiviert, das repräsentativ für den Zustand der Softwareschnittstelle ist, die einer Referenz entspricht, die dem entfernten Apparat zugeordnet ist, und zum Zuordnen dieser aktivierten Softwareschnittstelle zu dem Identifikator des entfernten Apparates,
- ein Modul zum Laden einer oder mehrere aktivierter Softwareschnittstellen zum Realisieren eines interaktiven Bedien- und Informationsmenüs, dass für einen Benutzer des mobilen Endgeräts aktivierbar ist.

13. Mobiles Endgerät gemäß Anspruch 12, **dadurch gekennzeichnet, dass** das Modul zum Erkunden und Erfassen von Identifikatoren entfernter Apparate (APP1) eine Akquirierung einer Referenz durchführt, die dem entfernten Apparat zugeordnet ist, von dem entfernten Apparat geliefert wird und zumindest einem Typ von Befehlen entspricht, die für den erfassten entfernten Apparat verfügbar sind.

14. Mobiles Endgerät gemäß Anspruch 12 oder 13, **dadurch gekennzeichnet, dass** es ein Lademodul für die Schnittstellenbibliothek (BIBLI) enthält, das mit einem Server von Softwareschnittstellen in Kommunikation ist, der Daten von Softwareschnittstellen in Abhängigkeit von einem persönlichen Identifikator des Benutzers oder von einem beruflichen Identifikator des Benutzers oder von einem Identifikator des Typs des Endgeräts liefert.

15. Mobiles Endgerät gemäß Anspruch 12 bis 14, **dadurch gekennzeichnet, dass** es enthält:
- gespeicherte Daten, die für Stimuli repräsentativ sind,
- gespeicherte Daten, die für Anwendungen repräsentativ sind, die Dienste liefern,
- ein Personalisierungsmodul, das nacheinander für das Bedien- und Informationsmenü Elemente vorschlägt, die repräsentativ für wählbare Stimuli sind, dann Elemente, die für wählbare Anwendungen repräsentativ sind, um der Erfassung des oder der gewählten Stimuli zugeordnet zu werden, dann Elemente, die für wählbare Schnittstellen repräsentativ sind, von denen jede Funktionen zum Aktivieren der gewählten Anwendung enthält, wobei das Personalisierungsmodul anschließend ein Speichern des oder der gewählten Stimuli durchführt, die der gewählten Anwendung und der gewählten Schnittstelle zugeordnet sind.

16. Mobiles Endgerät gemäß Anspruch 15, **dadurch gekennzeichnet, dass** ein gewählter stimulus Daten entspricht, die für ein Erregersignal repräsentativ sind, dass über die Kommunikationskomponente übertragen wird, repräsentativ für:
- einen Wert, der einem vorbestimmten Alarmbereich entspricht oder
- einen Wert, der eine vorbestimmte Alarmschwelle überschreitet,
- einen Identifikator des entfernten Apparats oder des Typs des entfernten Apparats, von dem das Signal kommt.

17. Mobiles Endgerät gemäß einem der Ansprüche 12 bis 16, **dadurch gekennzeichnet, dass** es ein Modul zum Auswählen einer Betriebsart (MOD1, MOD2) aus einer Mehrzahl von Betriebsarten enthält, wobei jede Betriebsart einer oder mehrere aktivierten Softwareschnittstellen (Inter1, Inter2, Inter3) zugeordnet ist, die das interaktive Bedien- und Informationsmenü realisiert, wobei eine Betriebsart personalisierte oder einer vorbestimmten Verwendung durch den Benutzer zugeordnet ist, wobei jede Betriebsart durch den Benutzer aktiviert werden kann, wobei die Betriebsarten in der Form von repräsentativen Daten gespeichert sind, um fernübertragen oder archiviert oder modifiziert und gespeichert zu werden, wobei das Aktivieren eines Auswahlmodus einem Erfassen eines Trägersignals zugeordnet sein kann.

18. Mobiles Endgerät gemäß einem der Ansprüche 12 bis 17, **dadurch gekennzeichnet, dass** es eine Mehrzahl von Kommunikationskomponenten (CTer1, Cter2, CTer3) enthält, davon mindestens:
- eine Komponente zur Kommunikation mit einem zellularen Kommunikationsnetz über Funkwellen und
- eine Komponente zur kontaktlosen Kommunikation über eine kurze Distanz mit Apparaten seiner nahen Umgebung.

19. Kommunikationssystem, das ein mobiles Endgerät gemäß einem der Ansprüche 12 bis 18 enthält, **dadurch gekennzeichnet, dass** es zumindest einen Server für Steuersoftwareschnittstellen enthält, der eine Datenbank von Softwareschnittstellen enthält, wobei das Feld der Datenbank für jede Softwareschnittstelle enthält:
- eine oder mehrere Referenzen von kompatiblen Anwendungen oder
- eine oder mehrere Referenzen von Typen kompatibler mobiler Endgeräte (Ter01, Ter02, Ter04, Ter03) oder
- einen oder mehrere berufliche Identifikatoren des Benutzers oder
- einen oder mehrere persönliche Identifikatoren des Benutzers.

20. Kommunikationssystem gemäß Anspruch 19, **dadurch gekennzeichnet, dass** es eine Vorrichtung (DET1) zum Erfassen des Endgerät in einer vorbestimmten Zone enthält, das die Kommunikation oder Kommunikationen des mobilen Endgeräts über kurze Distanz autorisiert nach einer gegenseitigen Authentifizierung mit dem mobilen Endgerät.

21. Kommunikationssystem gemäß Anspruch 19 oder 20, **dadurch gekennzeichnet, dass** es eine zentrale Vorrichtung zum Verwalten der verfügbaren Ressourcen enthält, die in Kommunikation mit dem mobilen Endgerät (Ter1, Ter2, Ter3, Ter4) ist und an das mobile Endgerät ein Erregersignal überträgt, das Daten enthält, die repräsentativ für die verfügbaren Ressourcen und Befehle sind.

## Claims

1. Method of communication implemented by a mobile terminal (Ter02, Ter03, Ter04) in its surrounding area comprising at least one remote device, the mobile terminal comprising a processing component (PTer) communicating with a storage component (MTer) and at least one communication component (CTer1, CTer2, CTer3), **characterised in that** it comprises:
- a step (Etp02) for detection, by the mobile terminal, of an excitation signal emanating from the remote device communicating with the terminal through the communication component, comprising the storage of an identifier of this remote device,
- a step (Etp06) for consultation of a library of software interfaces of the mobile terminal, for activation of at least one of the software interfaces corresponding to a reference associated with the remote device and association of this software interface with the identifier of the remote device and
- a step (Etp07) for displaying, as a function of at least the activated interface, of a command and information menu, which can be activated by the user of the mobile terminal.

2. Method for communication according to claim 1, **characterised in that** the step for consultation of the library of software interfaces of the mobile terminal is preceded by:
- a step (Etp03) for transmission, by the mobile terminal, to the identified device of a request for available commands,
- a step (Etp04) for transmission, by the identified device, of a reply comprising at least the reference associated with the remote device, supplied by the remote device and corresponding to a type of available command and
- a step for saving of the reply, by the mobile terminal.

3. Method according to claim 2, **characterised in that** the step for consultation of the library comprises at least:
- a step (Etp05) for comparison of at least the supplied reference, relating to the available commands, with references of an archiving file of the library, and
- reading (Etp06) of the software interface associated with said supplied reference in the library, activated and used for the command and information menu, if the archiving file comprises a reference corresponding to the supplied reference, or
- if the archiving file does not comprise any reference corresponding to said supplied reference, a step for extraction from the reply of an address of a server for software interfaces, followed by a step (Etp08) for transmission, by the mobile terminal, to the server for software interfaces, of a request for a software interface associated with the supplied reference, and followed by a step (Etp10) for saving in the library and activation of a software interface supplied by the server for software interfaces, associated with the reference supplied by the remote device and stored in the archiving file.

4. Method according to one of claims 1 to 3, **characterised in that** it is followed by a step for transmission of a request comprising one of the commands of the detected device, or one of the commands of a server in communication with the detected device, through the use of the command and information menu, the request comprising the command being transmitted to the device detected by its identifier.

5. Method according to one of claims 1 to 4, **characterised in that** the step for detection of the excitation signal is preceded by a step (Etp01) for activation of a module for detection and management of the stimuli, the activation of the module for detection and management of the stimuli being carried out by an external device (DET1) for detection of the mobile terminal in a predetermined perimeter (PER1), this external device transmitting at least one signal for activation of the module for detection and management of the stimuli.

6. Method according to claim 5, **characterised in that** the external device for detection allows the activation of the module for detection and management of the stimuli, after steps for mutual authentication between the mobile terminal and the external device for detection of the terminal in the predetermined perimeter.

7. Method according to one of claims 1 to 6, **characterised in that** it comprises customisation by the user of the command menu by:
- a step (Etp32) for selection of one or more stimuli each representative of a predetermined signal produced by a remote device an identifier of which is stored in the mobile terminal,
- a step (Etp33) for selection of one or more applications the references of which are stored in the mobile terminal, in order to be associated with the detection of the selected stimulus or stimuli,
- a step (Etp34) for selection of at least one of the software interfaces which comprises an interactive system for activation of functions of the selected application or applications,
- a step (Etp45) for storage and association of the selections of stimuli, applications and functions in the software interface, in order to define a mode of adaptation of the command and information menu, the selected software interface being incorporated in the command and information menu for detection of the selected stimulus or stimuli, in order to access the selected applications.

8. Method according to claim 7, **characterised in that** it is followed by a step for transfer of data representative of the command and information menu and its modes of adaptation, to a remote server for archiving in communication with the mobile terminal, the archiving in the server for archiving being carried out as a function of the stimuli, applications, interfaces and their functions, associated with a type of mobile terminal and a personal identifier of the user or an identifier of a profession of the user.

9. Method according to claim 8, **characterised in that** it is preceded by:
- a step for transmission of a request for updating of the library of interfaces, or respectively updating of the command and information menu, this request comprising the personal identifier of the user or the identifier of the profession of the user,
- a step for downloading from the remote server in communication with the terminal, as a function of the personal identifier of the user or the identifier of the profession of the user, of the library of software interfaces stored in the terminal, or respectively of data for updating the command and information menu.

10. Method according to one of claims 1 to 9, **characterised in that** the displaying of the command and information menu is carried out in parallel with detection of the surrounding active devices comprising:
- a step (Etp20) for transmission of requests for identifiers for the surrounding devices,
- a step (Etp21) for comparison of the identifiers received with the identifiers previously stored,
- a step (Etp24, Etp28) for interruption of the displaying of the command menu and updating of the command and information menu if a previously stored identifier is missing or if an additional identifier is detected in relation to the previously stored identifiers, and
- a step (Etp25, Etp29) for activation of the displaying of the updated command and information menu.

11. Method according to one of claims 1 to 10, **characterised in that** it comprises the management of a plurality of communication components and the management of a plurality of devices communicating with the mobile terminal each through one of the communication components.

12. Mobile terminal comprising at least one processing component (PTer) communicating with a memory (MTer) and a communication component (Cter1, Cter2, Cter3), **characterised in that** it comprises:
- a library (BIBLI) of software interfaces each associated with an interface reference (Ref1, Ref2, RefN) and an attribute (E1, E2, EN) representative of an active or passive state of the software interface,
- a module for exploration and determination of identifiers of remote devices, acquiring at least one identifier of a remote device, after detection, via the communication component, of an excitation signal emitted by that remote device,
- a module for consultation of the library (BIBLI) of software interfaces, activating the attribute representative of the state of the software interface corresponding to a reference associated with the remote device and for association of that activated software interface with the identifier of the remote device,
- a module for loading of one or more of the activated software interfaces, in order to produce an interactive command and information menu which can be activated by a user of the mobile terminal.

13. Mobile terminal according to claim 12, **characterised in that** the module for exploration and determination of identifiers of remote devices (APP1) acquires the reference associated with the remote device, supplied by the remote device and corresponding to at least one type of command available for the detected remote device.

14. Mobile terminal according to claim 12 or 13, **characterised in that** it comprises a module for loading of the library (BIBLI) of interfaces, in communication with a server for software interfaces supplying data of software interfaces as a function of a personal identifier of the user or a professional identifier of the user or an identifier of the type of terminal.

15. Mobile terminal according to claims 12 to 14, **characterised in that** it comprises:
- stored data representative of stimuli,
- stored data representative of applications providing services,
- a module for customisation successively offering, through the command and information menu, elements representative of selectable stimuli, then elements representative of selectable applications to be associated with the detection of the selected stimulus or stimuli, then elements representative of selectable interfaces each comprising functions of activations of the selected application, the module for customisation then storing the selected stimulus or stimuli associated with the selected application and the selected interface.

16. Mobile terminal according to claim 15, **characterised in that** a selected stimulus corresponds to data representative of an excitation signal transmitted by the communication component, representative of:
- a value belonging to a predetermined alerting range or
- a value exceeding a predetermined alerting threshold
- an identifier of the remote device or the type of remote device from which the signal emanates.

17. Mobile terminal according to one of claims 12 to 16, **characterised in that** it comprises a module for selection of a mode (MOD1, MOD2) of use from a plurality of modes of use, each mode of use being associated with one or more activated software interfaces (Inter1, Inter2, Inter3), producing the interactive command and information menu, one mode of use being customised or associated with a use predetermined by the user, each mode of use being capable of activation by the user, the modes of use being stored in the form of representative data in order to be downloaded or archived or modified and saved, the activation of a mode of selection being capable of association with detection of a triggering signal.

18. Mobile terminal according to one of claims 12 to 17, **characterised in that** it comprises a plurality of communication components (CTer1, CTer2, CTer3) including at least:
- one component for communication with a cellular communication network operating by radio frequency waves and,
- one component for contactless, short range communication with devices of its immediate surrounding area.

19. System for communication comprising a mobile terminal according to one of claims 12 to 18, **characterised in that** it comprises at least one server for command software interfaces comprising a database of software interfaces, the fields of the database comprising for each software interface:
- one or more references of compatible applications or,
- one or more references of compatible types of mobile terminals (Ter01, Ter02, Ter04, Ter03) or,
- one or more professional identifiers of the user or,
- one or more personal identifiers of the user.

20. System for communication according to claim 19, **characterised in that** it comprises a device (DET1) for detection of the terminal in a predetermined zone, authorizing the short range communication or communications of the mobile terminal, after mutual authentication with the mobile terminal.

21. System for communication according to claim 19 or 20, **characterised in that** it comprises a central device for management of available resources, in communication with the mobile terminal (Ter1, Ter2, Ter3, Ter4), transmitting to the mobile terminal an excitation signal comprising data representative of the available resources and commands.
